# FASCICULE DE BREVET EUROPEEN

(11) **EP 4 155 724 B1**
(45) Date de publication et mention de la délivrance du brevet: **17.01.2024**
(21) Numéro de dépôt: 22187703.8
(22) Date de dépôt: 29.07.2022
(51) Int. Cl.: G01N 29/04, G01N 29/12, G01N 29/46, G01N 29/14, G01N 29/24, G01N 29/34, G01N 29/42

(54) **PROCÉDÉ DE DÉTECTION D'UN DÉFAUT DANS UNE STRUCTURE D'UN DISPOSITIF PAR MODULATION VIBRO-ACOUSTIQUE**
VERFAHREN ZUR ERKENNUNG EINES DEFEKTS IN DER STRUKTUR EINER VORRICHTUNG DURCH VIBROAKUSTISCHE MODULATION
METHOD FOR DETECTING A FAULT IN A STRUCTURE OF A DEVICE BY VIBRO-ACOUSTIC MODULATION

(30) Priorité: 08.09.2021 FR 2109417
(43) Date de publication de la demande: 29.03.2023
(73) Titulaire: Commissariat à l'énergie atomique et aux énergies alternatives, 75015 Paris (FR)
(72) Inventeur: MESNIL, Olivier, 91191 Gif-sur-Yvette (FR); RIBAY, Guillemette, 91191 Gif-sur-Yvette (FR)
(74) Mandataire: INNOV-GROUP

(56) Documents cités:
- US-A1- 2021 156 759
- LEE YU FUNG ET AL: "Identification of fatigue crack under vibration by nonlinear guided waves", MECHANICAL SYSTEMS AND SIGNAL PROCESSING, ELSEVIER, AMSTERDAM, NL, vol. 163, 17 juin 2021 (2021-06-17), XP086717881, ISSN: 0888-3270, DOI: 10.1016/J.YMSSP.2021.108138 [extrait le 2021-06-17]
- OCHÔA PEDRO A ET AL: "Effects of high-amplitude low-frequency structural vibrations and machinery sound waves on ultrasonic guided wave propagation for health monitoring of composite aircraft primary structures", JOURNAL OF SOUND AND VIBRATION, ELSEVIER, AMSTERDAM , NL, vol. 475, 28 février 2020 (2020-02-28), XP086099601, ISSN: 0022-460X, DOI: 10.1016/J.JSV.2020.115289 [extrait le 2020-02-28]
- DZIEDZIECH KAJETAN ET AL: "Efficient swept sine chirp excitation in the non-linear vibro-acoustic wave modulation technique used for damage detection", SHM. STRUCTURAL HEALTH MONITORING , vol. 17, no. 3 30 avril 2017 (2017-04-30), pages 565-576, XP055916016, GB ISSN: 1475-9217, DOI: 10.1177/1475921717704638 Extrait de l'Internet: URL:http://journals.sagepub.com/doi/full-x ml/10.1177/1475921717704638

## Description

L'invention concerne un procédé de détection d'un défaut dans une structure d'un dispositif. L'invention concerne également un système pour la mise en oeuvre de ce procédé de détection.

L'invention s'applique en particulier, mais pas exclusivement, au domaine du contrôle non destructif (« nondestructive testing » en anglais) et à la surveillance d'intégrité structurelle (« Structural Health Monitoring » en anglais).

Des procédés connus de détection de défauts exploitent les interactions non linéaires entre un défaut de la structure et un signal haute fréquence qui apparaissent en présence d'un signal basse fréquence. De telles interactions non linéaires sont classiquement appelées "modulations vibro-acoustiques" et plus connues sous l'acronyme VAM («vibro-acoustic modulation»). Ces procédés permettent de détecter des défauts de type contact, c'est-à-dire des défauts qui, en absence de sollicitations extérieures sont dans un état fermé. Dans l'état fermé, le volume du défaut est minimal. Par exemple, lorsque le défaut correspond à une fissure, dans l'état fermé, les parois en vis-à-vis de cette fissure se touchent au moins sur une partie voire sur toute leur longueur. De tels défauts de type contact sont souvent des précurseurs de défauts qui s'aggravent au cours du temps. Ces défauts de type contact sont difficilement détectables justement parce que dans l'état fermé, ils ne correspondent pas nécessairement à une fissure ouverte qui peut interagir plus facilement avec des ondes qui se propagent dans la structure.

Le signal basse fréquence permet de déplacer périodiquement un défaut de type contact entre son état fermé et un état ouvert. Dans l'état ouvert, le volume du défaut est plus important. Par exemple, lorsque le défaut est une fissure, les parois en vis-à-vis de cette fissure sont plus éloignées l'une de l'autre que dans l'état fermé.

Dans l'état ouvert, les interactions du défaut avec le signal haute fréquence sont différentes des interactions du signal haute fréquence avec le défaut dans son état fermé. Ainsi, un autre avantage de la modulation vibro-acoustique est qu'elle ne nécessite pas de disposer d'une mesure de référence réalisée dans la structure en absence de défaut pour être capable de détecter l'apparition d'un tel défaut.

Enfin, la modulation vibro-acoustique utilise un signal haute fréquence dont la fréquence est généralement supérieure à 10 kHz ou à 20 kHz. Grâce à cela, il est possible de détecter de très petits défauts, par exemple des défauts micrométriques qui ne sont pas nécessairement détectables par d'autres procédés.

Dans les procédés connus, pour mettre en oeuvre la modulation vibro-acoustique, il faut :
- un émetteur basse fréquence qui génère le signal basse fréquence,
- un émetteur haute fréquence qui génère le signal haute fréquence,
- un capteur qui mesure le signal vibratoire causé par les signaux basse fréquence et haute fréquence générés en même temps dans la structure, et
- un calculateur qui traite les mesures du signal vibratoire.

Plus précisément, le calculateur met en oeuvre des algorithmes de traitement de signaux qui permettent de détecter la présence d'un lobe additionnel de puissance, dans un spectre de puissance du signal vibratoire, situé en dehors des plages de puissance où se concentre la puissance des signaux basse fréquence et haute fréquence. Pour être capable de détecter l'existence d'un tel lobe additionnel de puissance dans le spectre de puissance, les algorithmes de traitement de signal nécessitent la mise en oeuvre d'émetteur basse fréquence et d'émetteur haute fréquence qui génèrent des signaux basse fréquence et haute fréquence ayant des caractéristiques particulières. C'est ces caractéristiques particulières qui permettent ensuite la détection d'un lobe additionnel lorsque celui-ci est présent dans le spectre de puissance.

Des exemples de tels procédés connus sont décrits dans les documents suivantes :
- US2021/156759A1,
- Lee YU FUNG et Al : « Identification of fatigue crack under vibration by nonlinear guided waves », Mechanical Systems and Signal Processing, Elsevier, Amsterdam, NL, vol. 163, 17/06/2021.
En particulier, les deux documents ci-dessus citent la possibilité d'utiliser des vibrations naturelles de la structure lors de son utilisation en tant que signal basse fréquence pour la modulation vibro-acoustique.

D'autres procédés utilisent également un signal basse fréquence et un signal haute fréquence pour détecter des défauts dans une structure sans pour autant qu'il s'agisse de modulations vibro-acoustiques. Un exemple d'un tel procédé est décrit dans l'article suivant : OCHÔA PEDRO A et Al : « Effects of high-amplitude low-frequency structural vibration and machinery sound waves on ultrasonic guided wave propagation for health monitoring of composite aircraft primary structures », Journal of Sound and Vibration, Elsvier, Amsterdam, NL, vol. 475, 28 février 2020. Cet article ne traite pas de modulations vibro-acoustiques, car la durée du signal haute fréquence est beaucoup plus courte qu'une période du signal basse fréquence. Dans ces conditions, aucune non-linéarité n'est observée ou observable dans le spectre de puissance en cas de présence d'un défaut dans la structure.

Un autre procédé de détection de défaut par modulation vibro-acoustique est divulgué dans l'article suivant : Dziedziech et al : «Efficient swept sine chirp excitation in the non-linear vibro-acoustic wave modulation technique used for damage détection», Structural Health Monitoring, 2018, volume 17 (3), pages 565-576. Par la suite, cet article est désigné par la référence A1.

Dans le procédé de A1 pour qu'il soit possible de détecter l'existence de lobe additionnel de puissance dans le spectre de puissance du signal vibratoire, les deux conditions suivantes doivent être satisfaites :
i) les signaux basse fréquence et haute fréquence générés doivent systématiquement être en phase, et
ii) le taux de variation de la fréquence du signal basse fréquence doit être identique au taux de variation de la fréquence du signal haute fréquence.

Dans le procédé de A1, la condition ii) est satisfaite en imposant que le ratio entre la fréquence instantanée du signal basse fréquence et la fréquence instantanée du signal haute fréquence soit toujours constant. Dans le procédé de A1, ce ratio est égal 1/120.

Pour satisfaire les conditions i) et ii), il est donc nécessaire d'équiper la structure à la fois avec un émetteur basse fréquence dédié à la génération du signal basse fréquence souhaité et avec un émetteur haute fréquence dédié à la génération du signal haute fréquence souhaité.

De plus, il faut aussi que les signaux basse fréquence et haute fréquence soient émis en absence de bruit susceptible de perturber, notamment, le signal basse fréquence.

Ainsi, en milieu industriel notamment, les procédés connus utilisant la modulation vibro-acoustique pour détecter la présence d'un défaut restent assez complexes à mettre en oeuvre, notamment car ils nécessitent d'intégrer à la structure deux type d'émetteurs différents, à savoir l'émetteur basse fréquence et l'émetteur haute fréquence. De plus, ces procédés ne peuvent pas être mis en oeuvre en même temps que le dispositif qui intègre la structure est utilisé. En effet, l'utilisation d'un tel dispositif dans un milieu industriel se traduit par la présence de bruits importants, notamment dans les basses fréquences, qui viennent perturber le signal basse fréquence généré par l'émetteur basse fréquence.

L'invention vise à proposer un procédé de détection de défauts qui utilisent la modulation vibro-acoustique tout en étant plus simple à mettre en oeuvre. Elle a donc pour objet un procédé de détection d'un défaut dans une structure conforme à la revendication 1.

L'invention a également pour objet un système pour la mise en oeuvre de ce procédé de détection conforme à la revendication 10.

L'invention sera mieux comprise à la lecture de la description qui va suivre, donnée uniquement à titre d'exemple non limitatif et faite en se référant aux dessins sur lesquels :
- la figure 1 est une illustration schématique d'un système permettant de détecter un défaut dans une structure ;
- la figure 2 est un organigramme d'un procédé de détection d'un défaut susceptible d'être mis en oeuvre dans le système de la figure 1 ;
- les figures 3 à 6 sont des graphes illustrant des spectres de puissance de signaux générés lors de la mise en oeuvre du procédé de la figure 2 ;
- la figure 7 est un organigramme d'un autre procédé de détection d'un défaut susceptible d'être mis en oeuvre dans le système de la figure 2 ;
- la figure 8 est un graphe illustrant les spectres de puissance de différents signaux utilisés lors de la mise en oeuvre du procédé de la figure 7.

Dans la suite de cette description, les caractéristiques et fonctions bien connues de l'homme du métier ne sont pas décrites en détail.

Dans cette description, des exemples détaillés de modes de réalisation sont d'abord décrits dans un chapitre I en référence aux figures. Ensuite, dans un chapitre II, des variantes de ces modes de réalisations sont introduites. Enfin, les avantages des différents modes de réalisation sont présentés dans un chapitre III.

### Chapitre I : Exemples de modes de réalisation.

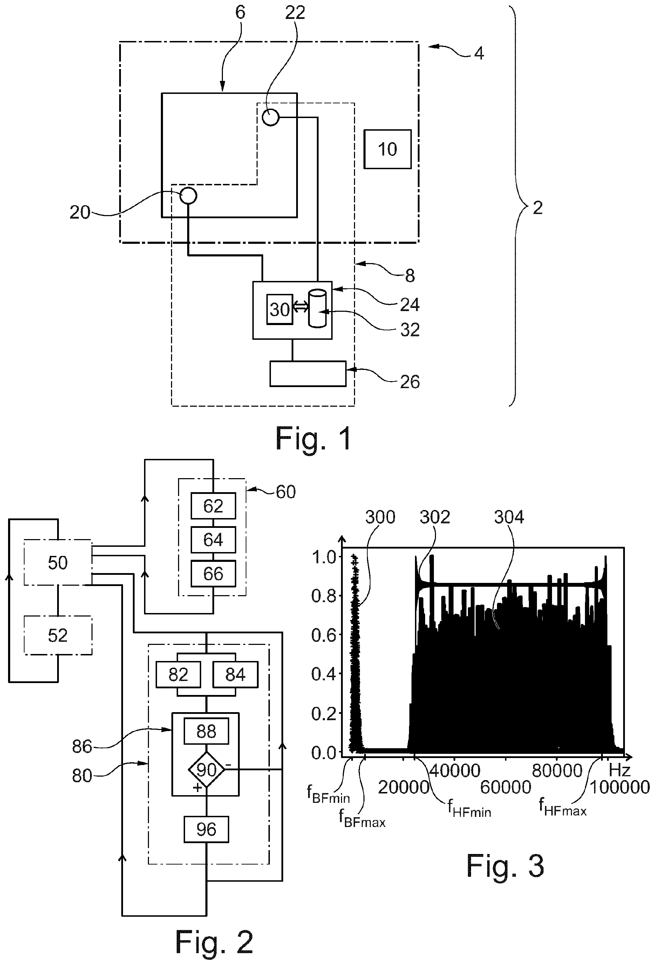

La figure 1 représente un système 2 qui comporte :
- un dispositif 4 équipé d'une structure 6, et
- un appareillage 8 de détection d'un défaut dans la structure 6.

La structure 6 est une pièce mécanique du dispositif 4. Par la suite, ce premier mode de réalisation est décrit dans le cas particulier où la structure 6 est une structure mince. Par exemple, ici, la structure mince 6 présente une face externe et une face interne séparées l'une de l'autre par l'épaisseur e₆ de la structure mince 6. L'épaisseur es est suffisamment petite pour que les faces externe et interne guident la propagation d'une onde élastique ou d'une onde de Lamb dans la structure mince dans des directions parallèles à ces faces externe et interne. À cet effet, typiquement, l'épaisseur e₆ est dix ou cent fois plus petite qu'une longueur et/ou une largeur de la structure mince 6.

Habituellement, l'épaisseur e₆ est inférieure à 1,5λᵥ, où λᵥ est la longueur d'onde d'une onde de volume de fréquences f_{HFmin} qui peut se propager parallèlement à la face externe de la structure mince 6. La fréquence f_{HFmin} est définie plus loin.

À titre d'illustration, ici, la structure mince 6 est un panneau composite constituant le fuselage d'un avion. Dans ce cas, le dispositif 4 est l'avion qui contient ce panneau composite.

La structure mince 6 est réalisée en matériaux composites laminés, c'est-à-dire par un empilement, dans une direction perpendiculaire à la face externe, d'une succession de couches chacune réalisée dans un matériau respectif. Comme expliqué dans le chapitre II sur les variantes, l'enseignement donné dans ce cas particulier est transposable sans difficulté particulière à de nombreuses autres structures possibles.

Pour simplifier la figure 1, la structure mince 6 est représentée sous la forme d'un simple rectangle. Toutefois, en réalité, la forme de la structure mince 6 est plus complexe. En particulier, dans le cas particulier d'un panneau composite du fuselage, la structure mince 6 présente typiquement des courbes arrondies.

Dans le cas où le dispositif 4 est un avion, le dispositif 4 comporte typiquement au moins un moteur 10 de propulsion qui, par exemple, entraîne en rotation les pales d'une turbine pour déplacer l'avion et le faire voler. Ainsi, dans ce mode de réalisation, l'utilisation normale du dispositif 4 consiste à entraîner en rotation cette turbine à l'aide du moteur 10.

Classiquement, l'utilisation normale du dispositif 4 génère un signal basse fréquence qui fait vibrer la structure mince 6 à basse fréquence. Une utilisation "normale" est une utilisation du dispositif 4 qui n'a pas uniquement pour but de détecter un défaut dans la structure mince 6. Ainsi, ici, l'utilisation normale du dispositif 4 consiste à entraîner les pales de la turbine à une vitesse qui permet de propulser l'avion le long d'une trajectoire. Dans ce texte, « basse fréquence » désigne des fréquences comprises entre 5 Hz et 20 kHz.

Le dispositif 4 est tel que 95 % de la puissance du signal basse fréquence est comprise dans une bande [f_{BFmin}, f_{BFmax}] de fréquences lorsque le dispositif 4 est utilisé en absence de signal haute fréquence généré par l'appareillage 8. Autrement dit, le spectre de puissance du signal basse fréquence construit à partir d'échantillons d'une mesure des vibrations de la structure mince 6 lorsque le dispositif 4 est utilisé, et en absence du signal haute fréquence généré par l'appareillage 8, présente un lobe de puissance qui représente 95 % de la puissance totale mesurée sur toute l'étendue du spectre de puissance construit qui s'étend de 5 Hz à 20 kHz. Ce lobe de puissance débute à la fréquence f_{BFmin} et se termine à la fréquence f_{BFmax}. Ce spectre de puissance est construit en appliquant une transformée de Fourier aux échantillons de la mesure des vibrations acquises à une fréquence d'échantillonnage fₑ constante. Cette fréquence fₑ est supérieure 40 kHz et, ici, également supérieure à deux fois la fréquence f_{HFmax}. La fréquence f_{HFmax} est décrite plus loin.

Ici, le dispositif 4 génère un signal basse fréquence lorsqu'il est utilisé pour lequel :
- la fréquence f_{BFmin} est supérieure à 5 Hz et, de préférence, supérieure à 100 Hz, et
- la fréquence f_{BFmax} est inférieure à 20 kHz ou à 5 kHz.

Par exemple, il a été observé expérimentalement que les vibrations dans la structure 6 qui apparaissent lorsque le moteur 10 entraîne la turbine en rotation pour propulser l'avion sont comprises entre 100 Hz et 2 kHz.

Les fréquences f_{BFmin} et f_{BFmax} sont différentes. La largeur de la bande [f_{BFmin} ; f_{BFmax}] est supérieure à 5 Hz et, typiquement, supérieure 100 Hz.

La puissance du signal basse fréquence généré par le dispositif 4 lorsqu'il est utilisé est suffisamment importante pour être capable de déplacer un défaut de type contact entre ses états ouvert et fermé. Le signal basse fréquence généré par le dispositif 4 lorsqu'il est utilisé est une onde vibratoire appelée également « onde élastique à basse fréquence ». Elle se propage parallèlement à la face externe de la structure mince 6 et de partout dans la structure mince 6. Elle est réfléchie par des discontinuités dans la structure mince 6 et, en particulier, par les bords de la structure mince 6.

Généralement, le signal basse fréquence généré par le dispositif 4 lors de son utilisation normale est un signal généré involontairement. Il s'agit donc d'un bruit. Ce bruit peut présenter les caractéristiques d'un champ diffus mais pas nécessairement. Les caractéristiques du signal basse fréquence ne peuvent donc pas être réglées ou contrôlées précisément contrairement aux caractéristiques d'un signal basse fréquence généré par un émetteur basse fréquence dédié à cette fonction. C'est pour cela que ce signal basse fréquence n'a pas été utilisé dans les procédés connus de détection de défauts tels que celui décrit dans l'article A1.

À cause d'un problème lors de la fabrication de la structure mince 6 ou à cause de l'usure liée à l'usage répété du dispositif 4, un défaut de type contact peut apparaître dans la structure mince 6. Un tel défaut de type contact est par exemple une fissure. Dans le cas d'un composant en matériaux composites laminés, une telle fissure peut apparaître à l'intérieur d'une des couches de matériaux du composant ou être le résultat d'un délaminage entre deux couches empilées l'une sur l'autre.

Il est important de détecter rapidement un tel défaut, notamment pour déclencher des opérations de maintenance préventives avant que le défaut ne s'agrandisse jusqu'à un stade où cela rend le dispositif 4 inutilisable.

L'appareillage 8 permet de détecter l'apparition d'un défaut de type contact dans la structure mince 6 à un stade précoce, c'est-à-dire bien avant que ce défaut rende le dispositif 4 inutilisable.

Pour cela, l'appareillage 8 utilise la modulation vibro-acoustique qui apparaît en présence d'un défaut, d'un signal basse fréquence et d'un signal haute fréquence. Il comporte à cet effet :
- un émetteur haute fréquence 20,
- un capteur 22,
- un calculateur électronique 24, et
- une interface homme-machine 26.

L'émetteur 20 est apte à générer un signal haute fréquence qui se propage dans la structure mince 6 parallèlement à sa face externe. Pour cela, l'émetteur 20 est fixé sur la structure mince 6 sans aucun degré de liberté dans des directions parallèles à la face externe de la structure mince 6. De plus, ici, l'émetteur 20 est fixé sur la structure mince 6 sans aucun degré de liberté dans une direction perpendiculaire à la face externe. Par exemple, l'émetteur 20 est collé sur la face externe ou interne de la structure mince 6. L'émetteur 20 peut aussi être reçu dans un logement réalisé à cet effet dans l'épaisseur de la structure mince 6. Dans ce dernier cas, l'émetteur 20 est situé entre les faces externe et interne de la structure mince 6.

L'émetteur 20 est apte à générer un signal haute fréquence qui présente les caractéristiques décrites ci-dessous. Ici, l'émetteur 20 ne remplit aucune autre fonction à l'intérieur du dispositif 4 ou du système 2 que celle consistant à générer ce signal haute fréquence.

Le signal haute fréquence généré par l'émetteur 20 est une onde élastique. Dans le cas d'une structure mince, de préférence, le signal haute fréquence est une onde de Lamb. 95 % de la puissance du signal haute fréquence est comprise dans une bande [f_{HFmin} ; f_{HFmax}] de fréquences lorsque le signal haute fréquence est émis en absence de signal basse fréquence. Ainsi, le spectre de puissance construit à partir d'échantillons d'une mesure des vibrations de la structure mince 6 lorsque le signal haute fréquence est émis et lorsque le dispositif 4 est inutilisé, présente un lobe de puissance qui représente 95 % de la puissance totale mesurée sur toute l'étendue du spectre de puissance construit. Ce lobe de puissance débute à la fréquence f_{HFmin} et se termine à la fréquence f_{HFmax}. Ce spectre de puissance est construit en appliquant une transformation de Fourier directement aux échantillons de la mesure des vibrations acquis à la fréquence fₑ d'échantillonnage constante.

Lorsque le dispositif 4 est inutilisé, la structure mince 6 n'est soumise à aucune vibration, sauf celles éventuellement générées par l'émetteur 20.

La fréquence f_{HFmin} est deux fois supérieure à la fréquence f_{BFmax} et généralement cinq ou dix fois supérieure à la fréquence f_{BFmax}.

La fréquence f_{HFmax} est choisie pour éviter la détection de défaut de trop petite taille. En effet, plus la fréquence f_{HFmax} est grande et plus la taille des défauts détectables par l'appareillage 8 est petite. Or il est souhaitable de ne pas détecter des défauts de trop petite taille qui ne présentent aucun risque pour le fonctionnement du dispositif 4 et qui ne doivent donc déclencher aucune opération de maintenance préventive. À cause de cela, généralement, la fréquence f_{HFmax} est inférieure à 5 MHz.

Les fréquences f_{HFmin} et f_{HFmax} sont dans la bande de fréquences où l'atténuation par unité de longueur des ondes de Lamb dans la structure mince 6 est faible. Typiquement, les fréquences f_{HFmin} et f_{HFmax} sont choisies pour que l'atténuation des ondes de Lamb soit suffisamment faible pour permettre aux ondes de Lamb de se propager sur une longueur suffisante avant d'être trop atténuée. Une "longueur suffisante" est une longueur qui permet aux ondes de Lamb d'atteindre le défaut à détecter. Par exemple, une longueur suffisante est une longueur comprise entre 0,1.Lₘₐₓ et Lₘₐₓ ou entre 0,5.Lₘₐₓ et Lₘₐₓ, où Lₘₐₓ est la plus grande distance qui sépare l'émetteur 20 d'un bord de la structure mince 6. "trop atténuée" signifie que la modulation vibro-acoustique générée par l'interaction du signal basse fréquence et des ondes de Lamb au niveau du défaut le plus éloigné que l'appareillage 8 doit permettre de détecter, n'est pas détectable à partir des mesures du capteur 22 car la puissance du signal causé par la modulation vibro-acoustique est inférieure ou égale à la puissance du bruit de mesure. Le bruit de mesure est égal à la somme du bruit ambiant dans la structure mince 6 et du bruit électronique de appareillage 8 et, notamment, du capteur 22. Ainsi, le choix des fréquences f_{HFmin} et f_{HFmax} dépend des caractéristiques de la structure mince 6 et des caractéristiques du bruit de mesure. Typiquement, les fréquences f_{HFmin} et f_{HFmax} sont donc choisies en réalisant des expérimentations ou des simulations numériques jusqu'à trouver des valeurs acceptables pour les fréquences f_{HFmin} et f_{HFmax}.

Les fréquences f_{HFmin} et f_{HFmax} sont également situées à l'intérieur de la bande passante du capteur 22, c'est-à-dire à l'intérieur de la bande de fréquences où les vibrations sont mesurables par ce capteur 22.

Enfin, le signal haute fréquence est conçu pour, combiné avec le signal basse fréquence généré par l'utilisation normale du dispositif 4, produire une modulation vibro-acoustique détectable lorsque la structure mince 6 comporte un défaut de type contact et cela sans imposer de contrainte particulière sur le signal basse fréquence. En effet, ici, les caractéristiques du signal basse fréquence sont imposées par la construction et l'utilisation normale du dispositif 4. Il a été établi que pour que la génération simultanée des signaux haute fréquence et basse fréquence produise une modulation vibro-acoustique détectable lorsqu'un défaut de type contact est présent, le signal haute fréquence généré par l'émetteur 20 doit vérifier deux conditions appelées par la suite, respectivement, condition (1) et condition (2).

La condition (1) est que la durée du signal haute fréquence doit être supérieure à 1/f_{BFmin}. Ici, pour satisfaire cette condition, le signal haute fréquence est émis pendant toute la durée dᵢ d'un intervalle [tᵢ ; tᵢ₊₁], Ainsi, l'émission du signal haute fréquence débute à un instant tᵢ et se termine à un instant tᵢ₊₁. Les intervalles d'émission du signal haute fréquence peuvent être répétés. De préférence, la durée dᵢ est plusieurs fois supérieure à 1/f_{BFmin}. Par exemple, la durée dᵢ est dix ou cent fois supérieure à 1/f_{BFmin}. Dans ce mode de réalisation, la durée dᵢ est choisie suffisamment longue pour que le signal haute fréquence ait le temps d'être réfléchi par les bords de la structure mince 6 avant de revenir vers le capteur 22.

Pour économiser de l'énergie, la durée dᵢ est aussi choisie assez courte, c'est-à-dire typiquement inférieure à 5 min ou 1 min ou 30 s.

La condition (2) est qu'il existe un spectre de puissance du signal vibratoire mesuré par le capteur 22 dans lequel :
- 95 % de la puissance du spectre du signal basse fréquence est comprise dans une plage [u_{BFmin} ; u_{BFmax}] de fréquences lorsque le dispositif 4 est utilisé en absence du signal haute fréquence généré par l'appareillage 8, et
- 95 % de la puissance du signal haute fréquence est comprise dans une plage [u_{HFmin} ; u_{HFmax}] de fréquences lorsque le signal haute fréquence est émis en absence du signal basse fréquence, et
- le signal haute fréquence est configuré pour que la largeur de la plage [u_{HFmin} ; u_{HFmax}] soit systématiquement inférieure à la fréquence u_{BFmin} relevée dans le même spectre de puissance.

Étant donné que le signal basse fréquence est généré par l'utilisation du dispositif 4, la largeur de la plage [u_{BFmin} ; u_{BFmax}] est systématiquement supérieure à 5 Hz ou 100 Hz.

Actuellement, la raison pour laquelle la condition (2) permet de détecter des modulations vibro-acoustiques alors que les caractéristiques du signal basse fréquence ne sont pas ajustables est la suivante : la modulation vibro-acoustique produite par un défaut génère dans le spectre de puissance des lobes additionnels de puissance. Ces lobes additionnels de puissance sont le résultat de l'apparition d'harmoniques à des fréquences égales à f_{HFi} + n.f_{BFm}, où :
- f_{HFi} est une fréquence comprise dans la plage [f_{HFmin} ; f_{HFmax}],
- f_{BFm} est une fréquence comprise dans la plage [f_{BFmin} ; f_{BFmax}],
- n est un entier relatif, c'est-à-dire un nombre entier pouvant être positif ou négatif, et
- le symbole "." désigne l'opération de multiplication.

La puissance de ces harmoniques est beaucoup plus faible que la puissance du signal haute fréquence. Ainsi, si une telle harmonique apparaît à l'intérieur de la plage [u_{HFmin} ; u_{HFmax}], elle ne peut pas être distinguée du signal haute fréquence lui-même et n'est donc pas détectable. Lorsque la condition (2) est vérifiée, cela garantit que ces harmoniques sont systématiquement situées en dehors de la plage [u_{HFmin} ; u_{HFmax}] et donc qu'elles sont détectables. De plus, il est avantageux que le signal haute fréquence soit configuré pour que la largeur de la plage [u_{HFmin} ; u_{HFmax}] soit deux, quatre ou dix fois inférieure à la fréquence u_{BFmin}.

Le spectre de puissance du signal vibratoire pour lequel la condition (2) est vérifiée n'est pas nécessairement celui construit en appliquant directement une transformée de Fourier aux échantillons du signal vibratoire acquis à la fréquence fₑ constante. Au contraire, comme illustré dans le mode de réalisation de la figure 2, il peut s'agir d'un spectre de puissance construit à partir d'échantillons du signal vibratoire ayant déjà subi un post-traitement tel qu'un re-échantillonnage adaptatif, un filtrage ou autre.

La fréquence f_{BFm} du signal basse fréquence et la fréquence f_{HFi} du signal haute fréquence qui forment un couple (f_{BFm} ; f_{HFi}) de fréquences pour lesquels une modulation vibro-acoustique se produit en présence d'un défaut dans la structure mince 6 ne sont pas ici connues à l'avance. Par exemple, la fréquence f_{HFi}, pour laquelle une modulation vibro-acoustique se produit en présence d'un défaut dans la structure mince 6, varient en fonction des caractéristiques de la structure mince, des caractéristiques du signal basse fréquence et parfois en plus en fonction des caractéristiques du défaut à détecter. Pour pallier à cette difficulté, dans ce premier mode de réalisation, le signal haute fréquence balaye une large bande de fréquences. A cet effet, la largeur de la plage [f_{HFmin} ; f_{HFmax}] est large, c'est-à-dire supérieure à 10 kHz et, de préférence, supérieure à 20 kHz ou à 50 kHz. Par conséquent, en utilisant une large plage [f_{HFmin} ; f_{HFmax}], la probabilité que cette plage inclut au moins une fréquence f_{HFi} augmente. Il est dès lors possible de mettre en oeuvre un procédé de détection utilisant la modulation vibro-acoustique sans pour cela déterminer au préalable précisément là où les fréquences f_{HFi} pour lesquelles la modulation vibro-acoustique apparaît lorsqu'un défaut est présent dans la structure mince.

Ici, pour balayer la bande [f_{HFmin} ; f_{HFmax}], le signal haute fréquence émis est un gazouillis plus connu sous le terme anglais de « chirp ». Dans ce cas, la fréquence du signal haute fréquence est modulée pour balayer au moins une fois toutes les fréquences de la bande [f_{HFmin} ; f_{HFmax}] pendant la durée dᵢ de l'intervalle [tᵢ ; tᵢ₊₁] et en suivant une loi prédéterminée L_{HF}. La loi L_{HF} associe à chaque instant t compris dans l'intervalle [tᵢ ; tᵢ₊₁] une fréquence instantanée prédéterminée f_{HF}(t) du signal haute fréquence. Par exemple, dans ce premier mode de réalisation, la loi L_{HF} est une fonction linéaire qui fait croître linéairement, en fonction du temps t, la fréquence instantanée f_{HF}(t) du signal haute fréquence en partant de la fréquence f_{HFmin} à l'instant tᵢ jusqu'à la fréquence f_{HFmax} à l'instant tᵢ₊₁.

Dans ce premier de mode de réalisation, l'amplitude instantanée du signal haute fréquence reste constante et n'est pas modulée. La loi L_{HF} est une loi prédéterminée à l'avance et mémorisée dans le calculateur 24.

Ainsi, dans ce premier mode de réalisation, le signal haute fréquence est entièrement défini à partir du moment où la fréquence f_{HFmin}, la durée dᵢ et la loi L_{HF} sont connues.

L'émetteur 20 est capable d'émettre le signal haute fréquence décrit ci-dessus. A titre d'illustration, l'émetteur 20 est un émetteur piézo-électrique commandé par le calculateur 24.

Le capteur 22 est apte à mesurer le signal vibratoire et, en particulier, les harmoniques résultant de la modulation vibro-acoustique lorsqu'un défaut est présent dans la structure mince. À cet effet, sa bande passante englobe la bande de fréquences dans laquelle ces harmoniques sont susceptibles d'apparaître. Ici, pour cela, la limite supérieure de sa bande passante à -3 dB est supérieure à 2f_{HFmax} ou 3f_{HFmax}.

La limite inférieure de sa bande passante à -3 dB est de préférence inférieure ou égale à 20 kHz. Ici, sa limite inférieure est suffisamment basse pour que ce même capteur 22 puisse être utilisé pour mesurer le signal basse fréquence généré lors de l'utilisation du dispositif 4. Par exemple cette limite inférieure est inférieure à 100 Hz ou à 10 Hz.

Le capteur 22 est fixé sur la structure mince sans aucun degré de liberté dans les directions parallèles à la face externe de la structure mince 6. Le capteur 22 est par exemple fixé sur la structure mince 6 comme décrit dans le cas de l'émetteur 20.

Dans ce mode de réalisation, l'appareillage 8 comporte un seul capteur 22 pour mesurer le signal vibratoire. Le capteur 22 est par exemple un capteur piézoélectrique.

Le calculateur 24 est relié :
- à l'émetteur 20 pour commander l'émission du signal haute fréquence tel que précédemment décrit,
- au capteur 22 pour acquérir les mesures du signal vibratoire à la fréquence d'échantillonnage fₑ, et
- à l'interface homme-machine 26 pour signaler à un utilisateur l'existence ou non d'un défaut dans la structure mince 6.

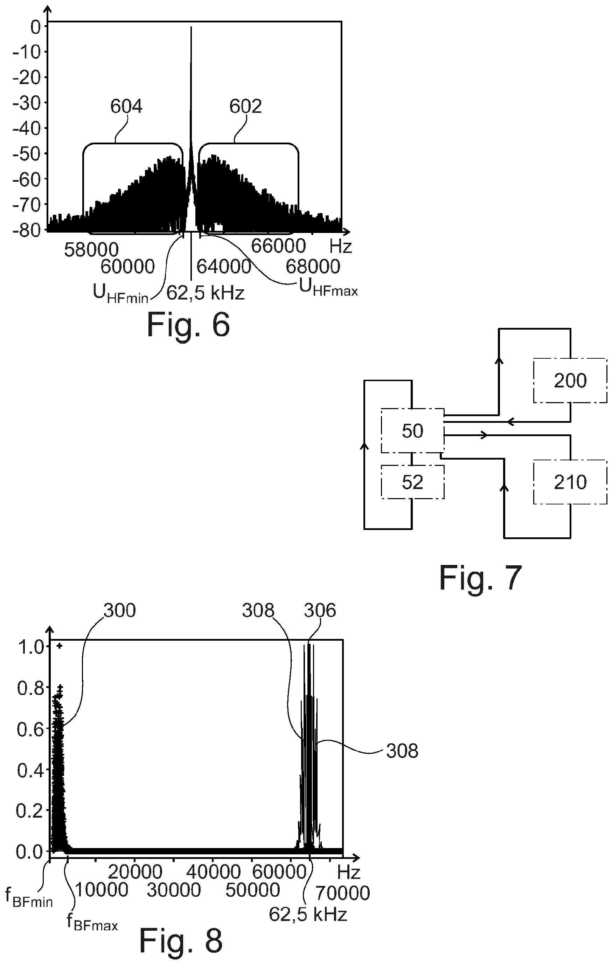

Le calculateur 24 est configuré pour mettre en oeuvre l'un des procédés de détection des figures 2 et 7. À cet effet, il comporte un microprocesseur programmable 30 et une mémoire 32 contenant les instructions et les données nécessaires pour la mise en oeuvre du procédé de détection.

L'interface homme-machine 6 comporte par exemple un écran ou un voyant qui permet de signaler à un être humain la présence d'un défaut dans la structure mince 6 lorsque le calculateur 24 a détecté un tel défaut.

Le calculateur 24 et l'interface homme-machine 26 n'ont pas besoin d'être directement fixés sur la structure mince 6. Ils sont au contraire déportés ailleurs dans l'avion. De plus, calculateur 24 et l'interface homme-machine 26 ne sont pas nécessairement dédiés seulement à la détection d'un défaut dans la structure mince 6. Ainsi, ils peuvent aussi être utilisés, en alternance, pour réaliser d'autres fonctions comme par exemple le traitement de mesures provenant d'autres capteurs que du capteur 22.

Le fonctionnement du système 2 va maintenant être décrit en référence au procédé de la figure 2 et à l'aide des graphes des figures 3 à 6.

Les graphes des figures 3 à 6 et le graphe de la figure 8 représentent des spectres de puissance. Sur ces graphes, les abscisses sont des fréquences exprimées en Hertz et les ordonnées représentent la puissance du signal pour une fréquence correspondante. Les ordonnées sont exprimées dans une unité arbitraire fonction de la puissance du signal et, par exemple, proportionnelle à la puissance de ce signal pour cette fréquence.

Le procédé de détection de la figure 2 comporte une phase 50 d'utilisation du dispositif 4 et, au moins en partie en parallèle :
- une phase 60 de calibration, et
- une phase 80 de détection d'un défaut.

La phase 50 d'utilisation peut être réitérée à plusieurs reprises. Dans ce cas, entre deux itérations successives de la phase 50, le procédé comporte une phase 52 de repos pendant laquelle le dispositif 4 n'est pas utilisé.

La phase 50 consiste à utiliser normalement le dispositif 4. Ici, pendant la phase 50, la turbine est entraînée en rotation par le moteur 10 pour propulser l'avion le long d'une trajectoire. Par exemple, pendant la phase 50, l'avion est en vol. Pendant toute la durée de la phase 50, l'utilisation du dispositif 4 provoque la génération du signal basse fréquence précédemment décrit dans la structure mince 6.

Pendant la phase 52, le dispositif 4 est inutilisé et la génération du signal basse fréquence est donc interrompue. Par exemple, pendant la phase 52, l'avion est stationnaire et garé sur un parking. Le moteur 10 est éteint et la turbine ne tourne pas.

Les phases 60 et 80 sont exécutées au moins en partie en parallèle de la phase 50 d'utilisation. Par contre, bien que cela soit possible et même dans certains cas avantageux, il n'est pas nécessaire que les phases 60 et 80 soient toutes les deux réalisées entièrement en parallèle d'une phase 50 d'utilisation ou entièrement en parallèle d'une même phase 50.

Lors de la phase 60, le capteur 22 mesure le signal vibratoire et le calculateur 24 acquiert, lors d'une étape 62, les mesures du capteur 22 à la fréquence d'échantillonnage fₑ. Lors de l'étape 62, le calculateur 24 inhibe la génération du signal haute fréquence. Ainsi, le signal vibratoire mesuré par le capteur 22 lors de l'étape 62 et acquis par le calculateur 24, correspond seulement au signal basse fréquence.

Ensuite, lors d'une étape 64, le calculateur 24 détermine la valeur des fréquences f_{BFmin} et f_{BFmax} qui, dans le spectre de puissance construit directement à partir des échantillons relevés à la fréquence fₑ, délimite la bande [f_{BFmin} ; f_{BFmax}] de fréquences.

Ensuite, lors d'une étape 66, le calculateur utilise la fréquence f_{BFmin} déterminée lors de l'étape 64 pour choisir une durée dᵢ de l'intervalle [tᵢ ; tᵢ₊₁] qui satisfait la condition (1) précédemment énoncée. Ensuite, toujours lors de l'étape 66, le calculateur 24 utilise la fréquence f_{BFmax} déterminée lors de l'étape 64 pour choisir une fréquence f_{HFmin} supérieure à deux fois la fréquence f_{BFmax} déterminée. Dès lors, à partir de cet instant, la forme d'onde du signal haute fréquence à générer est entièrement définie puisque la loi L_{HF} est préenregistrée dans la mémoire 32.

Il est souligné que le signal haute fréquence ainsi défini satisfait aussi la condition (2) notamment à cause de la forme d'onde imposée par la loi L_{HF} choisie. En effet, en procédant à un ré-échantillonnage adaptatif des échantillons acquis à la fréquence fₑ constante, il est possible d'obtenir un nouvel échantillonnage du signal vibratoire dans lequel la période d'échantillonnage instantanée T_{R}(t) à l'instant t n'est plus constante, mais fonction du ratio 1/f_{HF}(t), où f_{HF}(t) est la fréquence instantanée du signal haute fréquence à l'instant t. Typiquement, la période T_{R}(t) est proportionnelle à k/f_{HF}(t), où k est un entier naturel constant. Les procédés de ré-échantillonnage adaptatif sont connus. Par conséquent, le procédé de ré-échantillonnage adaptatif mis en oeuvre ici n'est pas décrit en détail. Par exemple, le procédé de ré-échantillonnage adaptatif mis en oeuvre est le même que celui décrit dans l'article A1.

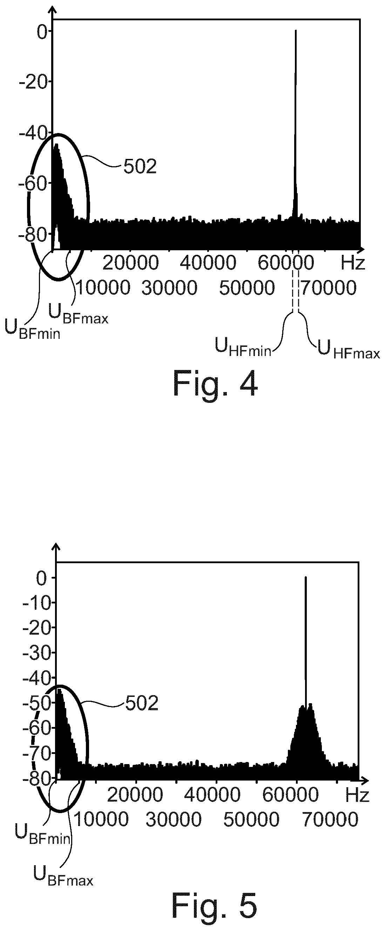

Dans le spectre de puissance construit en appliquant une transformée de Fourier aux échantillons du nouvel échantillonnage obtenu après le ré-échantillonnage adaptatif, la largeur de la bande [u_{HFmin} ; u_{HFmax}] est très petite, c'est-à-dire inférieure à 5 Hz. Ainsi, dans le spectre de puissance construit après ré-échantillonnage adaptatif, la largeur de la bande [u_{HFmin} ; u_{HFmax}] est systématiquement inférieure à la fréquence u_{BFmin} qui correspond à la limite inférieure de la bande [u_{BFmin} ; u_{BFmax}]. Ceci est illustré plus loin sur les figures 4 à 6.

Une fois la forme d'onde du signal haute fréquence définie de manière à satisfaire à la fois les conditions (1) et (2), la phase 80 de détection d'un défaut est exécutée. La phase 80 est au moins en partie exécutée en parallèle de la phase 50.

Après que la phase 50 ait débuté depuis plusieurs minutes, lors d'une étape 82, le calculateur 24 commande l'émetteur 20 pour générer le signal haute fréquence défini lors de la phase 60 en même temps que l'utilisation du dispositif 4 génère le signal basse fréquence.

En parallèle, lors d'une étape 84, le capteur 22 mesure le signal vibratoire causé par la propagation simultanée du signal haute fréquence et du signal basse fréquence dans la structure mince 6. Le calculateur 24 acquiert, à la fréquence fₑ les échantillons du signal vibratoire mesuré pendant toute la durée de l'intervalle [tᵢ ; tᵢ₊₁],

Après l'instant tᵢ₊₁, lors d'une étape 86, le calculateur 24 détecte, à partir des mesures acquises du signal vibratoire, la présence d'un défaut. Pour cela, le calculateur 24 détecte la présence d'au moins un lobe additionnel de puissance correspondant aux harmoniques causées par la modulation vibro-acoustique en cas de présence d'un défaut.

Ici, pour cela, lors d'une opération 88, le calculateur 24 procède d'abord à un ré-échantillonnage adaptatif pour obtenir le nouvel échantillonnage dans lequel la période instantanée T_{R}(t) d'échantillonnage est proportionnelle à 1/f_{HF}(t).

Ensuite, lors d'une opération 90, le calculateur 24 détecte la présence d'un lobe additionnel de puissance dans le spectre de puissance construite en appliquant une transformée de Fourier directement aux échantillons du nouvel échantillonnage. Si un tel lobe additionnel de puissance existe, il se situe habituellement à droite et à gauche d'un pic de puissance centré sur la fréquence moyenne f_{HFm} du signal haute fréquence. Dans ce mode de réalisation, la fréquence f_{HFm} est égale à (f_{HFmin} + f_{HFmax})/2.

Si un lobe additionnel de puissance est détecté lors de l'opération 90, alors le calculateur 24 procède à une étape 96. Lors de l'étape 96, il commande l'interface homme-machine 26 pour signaler l'existence d'un défaut dans la structure mince 6 à un utilisateur.

Dans le cas contraire, si aucun lobe additionnel de puissance n'est détecté lors de l'opération 90, le calculateur 24 inhibe le signalement d'un tel défaut.

La phase 80 peut être répétée plusieurs fois pendant la phase 50 d'utilisation. Par exemple, la phase 80 est réitérée à intervalles réguliers pour vérifier fréquemment l'état de santé de la structure mince 6. Il est aussi possible de déclencher l'exécution de la phase 80 en réponse à la réception, par le calculateur 24, d'une commande transmise par un utilisateur.

Le fonctionnement du procédé de la figure 2 est aussi illustré par les graphes des figures 3 à 6. Les graphes des figures 3 à 6 ont été obtenus dans le cas particulier suivant :
- les fréquences f_{BFmin} et f_{BFmax} sont égales, respectivement, à 500 Hz et à 2 kHz,
- les fréquences f_{HFmin} et f_{HFmax} sont égales, respectivement, à 25 kHz et à 100 kHz, et
- la durée dᵢ est égale à 1 secondes

Le graphe de la figure 3 représente :
- le spectre 300 de puissance du signal basse fréquence,
- le spectre 302 de puissance du signal haute fréquence, et
- le spectre 304 de puissance du signal vibratoire mesuré par le capteur 22 en présence d'un défaut de type contact dans la structure mince 6.
Ces trois spectres de puissance sont obtenus en appliquant une transformation de Fourier directement aux échantillons acquis à la fréquence d'échantillonnage fₑ pendant l'intervalle [tᵢ ; tᵢ₊₁].

Le spectre 302 s'étend continûment de 25 kHz à 100 kHz. Sur cette bande de 25 kHz à 100 kHz, le spectre 302 est pratiquement constant sauf à proximité des limites à 25 kHz et 100 kHz.

Ce graphe montre que dans le spectre de puissance 304 du signal vibratoire mesuré par le capteur 22, les harmoniques causées par des modulations vibro-acoustiques sont situées à l'intérieur de la bande [f_{HFmin} ; f_{HFmax}] et ne peuvent donc pas être clairement distinguées du lobe de puissance correspondant au signal haute fréquence.

Le graphe de la figure 4 représente le spectre de puissance du signal vibratoire obtenu après le ré-échantillonnage adaptatif et en absence de défaut dans la structure mince 6.

Les graphes des figures 5 à 6 représentent le spectre de puissance du même signal vibratoire que celui utilisé pour construire le spectre 304 mais obtenu après le ré-échantillonnage adaptatif, c'est-à-dire en appliquant une transformée de Fourier aux échantillons obtenus à l'issue de l'opération 88. Les graphes des figures 5 et 6 ont été obtenus en présence d'une microfissure dans la structure mince 6 et plus précisément en présence d'un début de délaminage entre deux couches de la pale.

Le graphe de la figure 6 est un agrandissement de la portion du graphe de la figure 5 autour du pic de puissance correspondant au signal haute fréquence. Sur ce graphe de la figure 6, les lobes additionnels de puissance situés à droite et à gauche du pic de puissance correspondant au signal haute fréquence sont entourés par des cadres, respectivement 602 et 604.

La comparaison du spectre de puissance 304 au spectre du graphe de la figure 4 montre que le ré-échantillonnage adaptatif a pour effet de compresser le spectre de puissance du signal haute fréquence autour de la fréquence moyenne f_{HFm}. Ici, cette fréquence f_{HFm} est égale à 62,5 kHz. Ainsi, dans le spectre de puissance obtenu après ré-échantillonnage adaptatif, la largeur de la bande [u_{HFmin} ; u_{HFmax}] est très petite et plus petite que la fréquence u_{BFmin}. Sur les figures 4 et 5, le lobe de puissance qui est causé par le signal basse fréquence est entouré par un ovale 502.

Les figures 5 et 6 montrent que dans le spectre de puissance obtenu après ré-échantillonnage adaptatif, les lobes additionnels de puissance causés par la modulation vibro-acoustique se distinguent clairement du pic de puissance causé par le signal haute fréquence situé à 62,5 kHz. Le calculateur 24 peut ainsi facilement détecter l'existence de ces lobes additionnels de puissance dans le spectre de puissance des figures 5 et 6.

La figure 7 représente un autre procédé de détection d'un défaut susceptible d'être mis en oeuvre par le calculateur 24 à la place du procédé de la figure 2. Ce procédé est identique au procédé de la figure 2 sauf que la phase 60 de calibration est remplacée par une phase 200 de calibration et la phase 80 de détection est remplacée par une phase 210 de détection.

La phase 200 consiste à identifier au moins une fréquence f_{HFi} pour laquelle la modulation vibro-acoustique apparaît lorsqu'un défaut est présent dans la structure mince 6 et en présence du signal basse fréquence généré par l'utilisation du dispositif 4. Par exemple la fréquence f_{HFi} est déterminée par expérimentation ou par simulation numérique. Une fois la fréquence f_{HFi} identifiée, celle-ci est enregistrée dans la mémoire 32 du calculateur 24. Notamment dans le cas où la fréquence f_{HFi} est déterminée par simulation numérique, il n'est pas nécessaire que cette phase 200 soit exécutée au moins en partie en parallèle d'une phase 50.

La phase 210 est identique à la phase 80 sauf que :
- lors de l'étape 84, le signal haute fréquence est un signal dont la fréquence est constante pendant toute la durée dᵢ et égale à la fréquence f_{HFi} identifiée lors de la phase 200, et
- l'opération 88 de ré-échantillonnage adaptatif est omise de sorte que l'opération 90 de détection du lobe additionnel de puissance est directement réalisée à partir des échantillons du signal vibratoire acquis à la fréquence d'échantillonnage fₑ et non pas à partir d'échantillons issus de l'opération 88 de ré-échantillonnage adaptatif.

Le graphe de la figure 8 représente :
- le spectre de puissance 300 du signal basse fréquence,
- le spectre de puissance 306 du signal haute fréquence, et
- le spectre de puissance 308 du signal vibratoire mesuré par le capteur 22 en présence d'un défaut.

Les spectres de puissance 300, 306 et 308 sont obtenus en appliquant une transformation de Fourier directement aux échantillons, respectivement, du signal basse fréquence, du signal haute fréquence et du signal vibratoire acquis à la fréquence d'échantillonnage fₑ.

Dans le graphe de la figure 8, le spectre 306 est une simple raie de largeur très faible située à la fréquence 62,5 kHz. Typiquement, la largeur de cette raie est inférieure à 5 Hz de sorte que la condition (2) est systématiquement satisfaite. Ainsi, comme illustré sur ce graphe, les lobes additionnels de puissance causés par la modulation vibro-acoustique sont situés de part et d'autre du pic de puissance à 62,5 kHz correspondant au signal haute fréquence et peuvent donc être facilement détectés par le calculateur 24. Sur la figure 8, pour améliorer la lisibilité du graphe, la hauteur des lobes additionnels est environ égale à la hauteur du pic à 62,5 kHz. Toutefois, en réalité, comme précédemment indiqué, la hauteur des lobes additionnels est beaucoup plus petite.

Dans le cas du procédé de la figure 7, les plages [u_{BFmin}; u_{BFmax}] et [u_{HFmin}; u_{HFmax}] sont égales, respectivement, aux bandes [f_{BFmin}; f_{BFmax}] et [f_{HFmin}; f_{HFmax}].

### Chapitre II - Variantes

### Variantes de la structure :

Le procédé décrit ici s'applique à d'autres structures minces qu'un panneau de fuselage d'un avion. Par exemple, la structure mince dans laquelle un défaut doit être détecté en mettant en oeuvre l'un des procédés décrits au chapitre I peut être toute pièce dans la largeur et la longueur est dix fois ou cent fois plus grande que son épaisseur. Dans le cas d'une pièce non rectangulaire, la largeur et la longueur de cette pièce non rectangulaire sont égales, respectivement, à la longueur et à la largeur du rectangle de plus petite surface qui contiennent entièrement la projection orthogonale de cette pièce non rectangulaire sur un plan, le long d'une direction normale à la face externe de cette pièce. Ainsi, la structure mince peut aussi être une plaque, un rail, un tube, un barreau ou toute autre pièce dont l'épaisseur est petite devant sa longueur ou sa largeur. En particulier, par exemple dans le cas d'un barreau, la structure mince ne comporte pas nécessairement à la fois une face externe et une face interne.

La structure mince peut être réalisée dans d'autres matériaux qu'un matériau composite laminé. Par exemple, la structure mince peut être réalisée dans un matériau non laminé ou non composite. Dans ce cas, par exemple, la structure mince est une pale d'une turbine ou d'une hélice. Ainsi, les procédés décrits ici s'appliquent aussi à des structures minces réalisées en métal ou en béton.

Les défauts détectables à l'aide des procédés décrits ici ne se limitent pas à des fissures ou des microfissures. Il peut aussi s'agir de défauts tel que des traces de corrosion ou d'une modification locale de la porosité de la structure mince.

Le dispositif équipé de la structure mince n'est pas nécessairement un avion. Par exemple, le dispositif 4 peut être tout véhicule de transport de matériel ou de personnes. Dans ce cas, l'utilisation du dispositif consiste à utiliser le véhicule pour transporter du matériel ou des personnes le long d'une trajectoire. Typiquement, un tel véhicule est équipé d'un moteur apte à le propulser le long de cette trajectoire lorsqu'il fonctionne. Le signal basse fréquence est alors par exemple généré par les vibrations de ce moteur de propulsion lorsqu'il fonctionne ou par l'écoulement turbulent d'un fluide qui s'écoule le long de la structure mince lorsque ce véhicule se déplace. Lorsque le dispositif est un véhicule, la structure mince est par exemple une pièce de la carrosserie de ce véhicule ou du châssis de ce véhicule ou d'un moteur de ce véhicule. Le véhicule peut être un aéronef, un véhicule automobile, un véhicule ferroviaire, un véhicule de transport maritime, une fusée ou autre.

Le dispositif peut aussi être une canalisation de transport d'un fluide. Dans ce cas, l'utilisation du dispositif consiste à faire circuler, typiquement en régime turbulent, le fluide à transporter à l'intérieur de la canalisation. Dans ce cas, la structure mince est typiquement la paroi de la canalisation. Le fluide transporté peut être un liquide ou un gaz.

Le dispositif peut aussi être un ouvrage sur lequel circule un véhicule de transport de matériel et/ou de personnes. Dans ce cas, l'utilisation du dispositif consiste à faire circuler le véhicule de transport sur cet ouvrage. L'ouvrage est par exemple un ouvrage de génie civil tel qu'un pont ou une voie sur laquelle circule le véhicule de transport. Dans ce cas, la structure mince est par exemple un rail sur lequel circule un véhicule ferroviaire.

En variante, la structure n'est pas une structure mince. Dans ce cas, le signal haute fréquence est adapté pour se propager, sans trop être atténué dans la structure et, de préférence, parallèlement à une face de cette structure. Par exemple, pour cela, l'onde de Lamb est remplacée par une onde de Rayleigh qui se propage parallèlement à une face de la structure.

### Variantes de l'appareillage de détection :

D'autres technologies de capteur sont utilisables pour réaliser le capteur 22. Par exemple, le capteur 22 peut être réalisé à l'aide :
- d'un capteur électro-magnéto-acoustique, plus connu sous l'acronyme EMAT («Electro Magneto-Acoustic Transducer),
- d'un film en matériaux PVDF (Polyfluorure de vinylidène), ou
- d'une fibre optique dans laquelle est aménagé un réseau de Bragg.

L'utilisation d'un capteur EMAT dans le contexte de la détection de défaut dans une structure mince métallique est par exemple décrite dans la demande FR3105554. Un capteur EMAT est intéressant en ce que la mesure du signal vibratoire s'effectue sans contact direct entre le capteur et la face externe ou interne de la structure mince. Dans ce cas, le capteur EMAT est fixé sur la structure mince de manière à ne présenter aucun degré de liberté dans une direction parallèle à la face de la structure mince sur laquelle il est fixé. Par contre, il peut présenter un faible degré de liberté dans une direction perpendiculaire à cette face.

L'utilisation d'un réseau de Bragg en tant que capteur du signal vibratoire est décrite en détail dans la demande FR3014200.

Dans une variante simplifiée, le capteur 22 est uniquement apte à mesurer les composantes du signal vibratoire dont les fréquences sont supérieures à f_{BFmax}. Dans ce cas, ce capteur ne peut pas être utilisé lors de la phase 60 de calibration. Dès lors, la phase 60 de calibration est réalisée en utilisant un autre capteur capable de mesurer le signal basse fréquence. Cet autre capteur peut être fixé sur la structure mince 6 uniquement lors de la phase de calibration puis retiré ensuite. En effet, cet autre capteur n'est pas nécessaire pour la mise en oeuvre de la phase 80 ou de la phase 210 de détection.

Le nombre de capteurs utilisés dans l'appareillage 8 pour mesurer le signal vibratoire peut être supérieur à un. Dans le cas où le nombre de capteurs est supérieur à deux, la localisation du défaut détecté dans la structure mince est souvent en plus possible.

D'autres modes de réalisation sont possibles pour l'émetteur 20. Par exemple, un capteur piézo-électrique, un capteur EMAT, un film PVDF peuvent aussi être utilisés pour générer le signal haute fréquence. Dans ce cas, le même capteur peut en plus être utilisé pour générer le signal haute fréquence et, en alternance, pour mesurer le signal vibratoire.

En variante, l'émetteur 20 génère, en tant que signal haute fréquence, non pas une onde de Lamb mais un autre type d'onde élastique ultrasonore telle qu'une onde de volume, une onde de surface, une onde de Rayleigh ou autre. Dans ces derniers cas, il n'est pas nécessaire que la structure 6 soit une structure mince.

L'appareillage 8 peut aussi comporter plusieurs exemplaires de l'émetteur 20 fixés à différents endroits sur la structure mince.

En variante, l'interface homme-machine 26 est amovible. Dans ce cas, typiquement, lors de l'utilisation du dispositif 4, l'interface 26 n'est pas présente. L'interface 26 est raccordée au calculateur 24 uniquement lors d'une opération de maintenance préventive pour afficher l'existence ou non d'un défaut.

### Variantes du procédé :

La phase de calibration peut être omise. Dans ce cas, par exemple, la fréquence f_{HFmin} et la durée dᵢ sont des constantes pré-enregistrées dans la mémoire 32. Ces constantes ont, au préalable, été déterminées pour que la condition (1) soit satisfaite, par exemple, à partir de simulations numériques et/ou à partir de mesures réalisées sur un prototype.

Lors de la phase 60 de calibration, la fréquence d'échantillonnage n'est pas nécessairement supérieure à deux fois la fréquence f_{HFmax}.

D'autres méthodes de détection des lobes additionnels de puissance dans le spectre de puissance sont possibles. En particulier, bien que ce soit un mode de réalisation particulièrement avantageux, il n'est pas nécessaire de mettre en oeuvre un ré-échantillonnage adaptatif. Par exemple, dans une première variante, au lieu d'échantillonner la mesure du capteur 22 à la fréquence constante fₑ, la mesure du capteur 22 est directement échantillonnée avec un pas non régulier égal à T_{R}(t). Dans ce cas, par exemple, comme indiqué ci-dessus, la phase de calibration est omise. Dans une autre variante, les mesures acquises peuvent être divisées en courtes fenêtres temporelles. Par exemple, pour obtenir un spectre de puissance dans lequel les lobes additionnels de puissance se détachent clairement du bruit de fond et du pic de puissance du signal haute fréquence, une méthode utilisant les transformées de Fourier à temps court, plus connue sous l'acronyme STFT («Short Time Fourier Transform) peut aussi être mise en oeuvre en tant qu'alternative à une méthode de ré-échantillonnage adaptatif. La mise en oeuvre de telles transformées de Fourier à temps court à cette fin, est par exemple décrite en détail dans l'article A1. Il existe encore d'autres méthodes alternatives au ré-échantillonnage adaptatif. De telles méthodes alternatives sont, par exemple, décrites dans l'article suivant : Zhipeng Feng et Al, "Recent advances in time-frequency analysis methods for machinery fault diagnosis: A review with application examples", Mechanical Systems and Signal Processing, Volume 38, Issue 1, 5 July 2013, Pages 165-205.

Les méthodes précédemment décrites pour obtenir un spectre de puissance dans lequel les harmoniques provoquées par la modulation vibro-acoustique sont détectables peuvent être combinées avec d'autres méthodes connues pour améliorer le rapport signal sur bruit et ainsi permettre d'isoler plus facilement les lobes additionnels de puissance. Par exemple, il est possible d'utiliser à cette fin les techniques d'inversion d'impulsions ou de modulation d'amplitude. Le lecteur peut se référer à l'article suivant pour une description plus détaillée de telles techniques : SONG et AL : "Coded excitation for ultrasound tissue harmonic imaging", Ultrasonics 50, 2010, pages 613-619. Il est aussi possible de réduire le bruit en mettant en oeuvre des méthodes conventionnelles de filtrage comme une simple moyenne de plusieurs échantillons.

Lorsque l'appareillage 8 comporte plusieurs capteurs et typiquement au moins trois capteurs répartis sur la structure mince, il est possible, non seulement de détecter la présence d'un défaut, mais aussi de localiser son emplacement. Pour cela, par exemple, les procédés de détection décrits sont combinés avec une méthode connue de localisation d'un défaut à partir des signaux vibratoires mesurés par chacun des capteurs. Par exemple, la distance entre un capteur et le défaut détecté est estimée à partir du temps de propagation du signal vibratoire jusqu'à ce capteur puis, par triangulation, l'emplacement du défaut détecté est estimé. Une méthode basée sur ce principe est par exemple décrite dans la demande FR3014200. La méthode d'imagerie de défaut décrite dans la demande FR3075373 peut aussi être adaptée pour utiliser les signaux vibratoires mesurés par chacun des capteurs de l'appareillage 8 afin de localiser le défaut détecté.

Dans le cas où la localisation d'un défaut doit être estimée, de préférence, la distance entre l'émetteur 20 et chacun des capteurs est plus grande qu'une longueur d'onde λ_{HFmin} du signal haute fréquence à la fréquence f_{HFmin}. Typiquement, cette distance est supérieure à 1 cm, 5 cm ou 10 cm. De plus, de préférence, la durée d'émission du signal haute fréquence est choisie suffisamment courte pour que le signal haute fréquence émis ne soit pas réfléchi par des discontinuités de la structure mince comme par exemple ses bords.

D'autres formes de « chirp » sont possibles en tant que signal haute fréquence. Par exemple, au lieu d'une croissance linéaire de la fréquence, il peut s'agir d'une décroissance linéaire de la fréquence. La croissance linéaire de la fréquence instantanée pendant la durée dᵢ peut aussi être remplacée par une croissance exponentielle de la fréquence instantanée pendant cette durée dᵢ. Dans ces cas, la méthode de ré-échantillonnage adaptatif doit être adaptée pour obtenir une nouvelle période d'échantillonnage T_{R}(t) à l'instant t qui reste un multiple entier de la période 1/f_{HF}(t). Par exemple, la définition d'un tel signal pour lequel la fréquence instantanée f_{HF}(t) augmente exponentiellement pendant la durée dᵢ est décrite dans l'article suivant : GUIDORZI et Al : "Impulse responses measured with MLS o Swept-Sine signals applied to architectureal acoustics : an in-depth analysis of the two methods ans somme case studies of measurements inside theaters", Energy Procedia 78, 2015, pages 1611-1616.

En variante, en plus de moduler la fréquence pendant la durée dᵢ, il est aussi possible de moduler l'amplitude du signal haute fréquence selon une loi prédéterminée LA_{HF} qui à chaque instant t de l'intervalle [tᵢ ; tᵢ₊₁] associe une amplitude instantanée A_{HF}(t) non nulle du signal haute fréquence.

Comme illustré dans le cas du mode de réalisation de la figure 7, en variante, le signal haute fréquence n'est pas un « chirp ». Par exemple, le signal haute fréquence peut aussi être un signal haute fréquence correspondant à un spectre de puissance combinant plusieurs signaux mono-fréquences à des fréquences distinctes.

L'étape 86 de détection peut être réalisée à un moment où le dispositif 4 n'est pas utilisé. Dans ce cas, lors de la phase 50, les mesures du capteur 22 sont enregistrées dans la mémoire 32 puis le traitement de ces mesures enregistrées est réalisé en parallèle de la phase 52.

### Chapitre III- Avantages des modes de réalisation décrits

La condition (2) permet d'utiliser un signal basse fréquence naturellement généré lors de l'utilisation du dispositif pour détecter des défauts au lieu d'utiliser des signaux basse fréquence générés par un émetteur basse fréquence dédié à cet usage. Ainsi, les différents modes de réalisation du procédé de détection décrits ici conservent les avantages des procédés de détection utilisant la modulation vibro-acoustique tout en présentant en plus l'avantage qu'il n'est pas nécessaire d'installer un émetteur basse fréquence additionnel dans le dispositif pour mettre en oeuvre ce procédé de détection.

De plus, puisque le procédé décrit ici exploite le signal basse fréquence naturellement généré lors de l'utilisation du dispositif, la détection de défauts est possible en même temps que ce dispositif est utilisé. À l'inverse, dans les procédés connus de détection qui exploitent la modulation vibro-acoustique, ces procédés doivent être mis en oeuvre en l'absence du signal basse fréquence naturellement généré par l'utilisation normale du dispositif, ce qui nécessite l'interruption de l'utilisation du dispositif pour détecter un défaut.

Le fait que la largeur de la bande [f_{HFmin} ; f_{HFmax}] soit supérieure à 10 kHz et de préférence supérieure à 50 kHz permet d'obtenir un signal haute fréquence qui balaye une large plage de fréquences à chaque fois qu'il est émis. Dans ces conditions, il n'est pas nécessaire de procéder à une analyse préalable pour déterminer précisément la ou les fréquences f_{HFi} du signal haute fréquence pour lesquels une modulation vibro-acoustique apparaît en présence d'un défaut. Cela simplifie donc la mise en oeuvre du procédé de détection. Cela permet aussi de détecter un plus grand nombre de défauts différents. En effet, selon la nature du défaut présent, la fréquence f_{HFi} du signal haute fréquence pour laquelle une modulation vibro-acoustique apparaît n'est pas nécessairement toujours la même. Ainsi, en balayant une large plage de fréquences, le signal haute fréquence rend le procédé sensible à différentes natures de défauts.

Le fait d'utiliser un seul capteur simplifie la mise en oeuvre du procédé de détection.

La mise en oeuvre d'un ré-échantillonnage adaptatif permet d'augmenter la sensibilité du procédé de détection.

La phase de calibration permet de régler automatiquement la fréquence f_{HFmin} et la durée dᵢ du signal haute fréquence. Cela simplifie donc la mise en oeuvre du procédé et permet de l'adapter automatiquement à un plus grand nombre de situations différentes.

L'utilisation d'onde de Lamb pour le signal haute fréquence permet de diminuer la consommation d'énergie de l'appareillage 8 car l'atténuation des ondes de Lamb dans une structure mince est faible.

## Revendications

1. Procédé de détection d'un défaut dans une structure d'un dispositif par modulation vibro-acoustique, ce procédé comportant :
- la génération (50) d'un signal basse fréquence qui fait vibrer la structure, 95% de la puissance de ce signal basse fréquence étant comprise dans une plage [f_{BFmin}; f_{BFmax}] de fréquences supérieure à 5 Hz, où la fréquence f_{BFmin} est supérieure à 5 Hz et la fréquence f_{BFmax} est inférieure à 20 kHz,
- en même temps que la présence du signal basse fréquence, la génération (82), par un émetteur haute fréquence solidaire de la structure, d'un signal haute fréquence qui se propage dans l'épaisseur de la structure et parallèlement à une face de la structure, 95% de la puissance du signal haute fréquence généré étant comprise dans une bande [f_{HFmin}; f_{HFmax}] de fréquences, où la fréquence f_{HFmin} est deux fois supérieure à la fréquence f_{BFmax} et la durée du signal haute fréquence est supérieure à 1/f_{BFmin},
- la mesure (84), par un capteur, d'un signal vibratoire causé par les signaux basse fréquence et haute fréquence générés en même temps, un spectre de puissance de ce signal vibratoire comportant :
- une première plage [u_{BFmin}; u_{BFmax}] de fréquences qui délimite une zone qui contient 95% de la puissance du signal basse fréquence généré en absence du signal haute fréquence, la fréquence u_{BFmin} étant supérieure à 5 Hz,
- une seconde plage [u_{HFmin}; u_{HFmax}] de fréquences qui délimite une zone qui contient 95% de la puissance du signal haute fréquence généré en absence du signal basse fréquence, et
- uniquement lorsque la structure comporte un défaut, au moins un lobe additionnel de puissance situé en dehors des plages [u_{BFmin}; u_{BFmax}] et [u_{HFmin}, u_{HFmax}], puis
- la détection (86), à partir des mesures du signal vibratoire, de l'existence du lobe additionnel, puis
- le signalement (96) d'un défaut dans la structure si un tel lobe additionnel est détecté et, sinon, l'absence de signalement d'un défaut dans la structure, dans lequel :
- la génération (50) du signal basse fréquence comporte seulement l'utilisation du dispositif, cette utilisation du dispositif générant le signal basse fréquence sans avoir recours à un émetteur basse fréquence uniquement utilisé pour générer ce signal basse fréquence,
- la largeur de la première plage [u_{BFmin}; u_{BFmax}] est supérieure à 5 Hz, et
- la largeur de la seconde plage [u_{HFmin}; u_{HFmax}] de fréquences est systématiquement inférieure à u_{BFmin},
**caractérisé en ce que** :
- la génération (82) du signal haute fréquence comporte :
- la génération du signal haute fréquence pendant toute la durée d'un intervalle [tᵢ; tᵢ₊₁], la génération du signal haute fréquence débutant à l'instant tᵢ et s'arrêtant à l'instant tᵢ₊₁, la durée de cet intervalle [tᵢ; tᵢ₊₁] étant supérieure à 1/f_{BFmin}, et
- pendant cet intervalle [tᵢ; tᵢ₊₁], la fréquence du signal haute fréquence est modulée pour passer de la fréquence f_{HFmin} à la fréquence f_{HFmax} en suivant une loi prédéterminée L_{HF} de variation qui à chaque instant t situé à l'intérieur de l'intervalle [tᵢ; tᵢ₊₁] associe une fréquence instantanée prédéterminée f_{HF}(t) du signal haute fréquence,
- la détection (86) de l'existence du lobe additionnel comporte :
- une opération (88) de ré-échantillonnage adaptatif des mesures du capteur pour obtenir un nouvel échantillonnage des mesures du capteur dans lequel la période d'échantillonnage instantanée à chaque instant t de l'intervalle [tᵢ; tᵢ₊₁] est un multiple entier de 1/f_{HF}(t), le spectre de puissance du nouvel échantillonnage obtenu comportant la première plage [u_{BFmin}; u_{BFmax}] de fréquences, la seconde plage [u_{HFmin}; u_{HFmax}] de fréquences et, uniquement lorsque la structure comporte un défaut, au moins un lobe additionnel de puissance situé en dehors de la première plage [u_{BFmin}; u_{BFmax}] et en dehors de la seconde plage [u_{HFmin}; u_{HFmax}], puis- la détection du lobe additionnel dans le spectre de puissance du nouvel échantillonnage obtenu.

2. Procédé selon la revendication 1, dans lequel la largeur de la bande [f_{HFmin}; f_{HFmax}] de fréquences est supérieure à 10 kHz et, de préférence, supérieure à 50 kHz.

3. Procédé selon l'une quelconque des revendications précédentes, dans lequel un seul capteur est utilisé pour mesurer le signal vibratoire.

4. Procédé selon l'une quelconque des revendications précédentes, dans lequel la loi L_{HF} est une fonction linéaire ou une fonction exponentielle du temps.

5. Procédé selon l'une quelconque des revendications précédentes, dans lequel le procédé comporte une phase (60) de calibration qui comporte :
- l'arrêt de la génération du signal haute fréquence et, en parallèle, la mesure (62), par le capteur, du signal vibratoire causé par le seul signal basse fréquence, puis
- la détermination (64), à partir du signal vibratoire causé par le seul signal basse fréquence, de la fréquence f_{BFmin}, puis
- le réglage de l'émetteur haute fréquence pour que la génération du signal haute fréquence dure pendant une durée supérieure à 1/f_{BFmin}.

6. Procédé selon l'une quelconque des revendications précédentes, dans lequel le signal haute fréquence généré est une onde de Lamb ou une onde de Rayleigh.

7. Procédé selon l'une quelconque des revendications 1, 2 et 4 à 5, dans lequel le procédé comporte :
- la mesure (84), par plusieurs capteurs solidaires de la structure et disposés à différents emplacements de la structure, du signal vibratoire causé par les signaux basse fréquence et haute fréquence générés en même temps, et
- la détection du défaut et l'estimation de sa position dans la structure à partir des mesures du signal vibratoire réalisées par lesdits plusieurs capteurs.

8. Procédé selon l'une quelconque des revendications précédentes, dans lequel l'utilisation du dispositif qui génère le signal basse fréquence est choisie dans le groupe constitué des utilisations suivantes :
- dans le cas où le dispositif est un véhicule de transport d'un matériel ou d'une personne, l'utilisation du dispositif consiste à transporter ce matériel ou cette personne le long d'une trajectoire à l'aide de ce véhicule,
- dans le cas où le dispositif est une canalisation de transport de fluide, l'utilisation du dispositif consiste à faire circuler, en régime turbulent, le fluide à transporter à l'intérieur de cette canalisation,
- dans le cas où le dispositif est un ouvrage sur lequel circule un véhicule de transport d'un matériel ou d'une personne, l'utilisation du dispositif consiste à faire circuler ce véhicule de transport sur cette ouvrage, et
- dans le cas où le dispositif est une hélice, l'utilisation du dispositif consiste à entraîner en rotation l'hélice pour déplacer une masse de fluide à l'aide de cette hélice.

9. Procédé selon l'une quelconque des revendications précédentes, dans lequel la génération du signal basse fréquence comporte la génération du signal basse fréquence avec une puissance suffisante pour déformer périodiquement le défaut entre un état fermé et un état ouvert à une fréquence comprise dans la bande [f_{BFmin}; f_{BFmax}].

10. Système comportant un dispositif (4) équipé d'une structure (6), ce système étant apte à générer, lorsqu'il est utilisé, un signal basse fréquence qui fait vibrer la structure, 95% de la puissance de ce signal basse fréquence étant comprise dans une plage [f_{BFmin}; f_{BFmax}] de fréquences supérieure à 5 Hz, où la fréquence f_{BFmin} est supérieure à 5 Hz et la fréquence f_{BFmax} est inférieure à 20 kHz,
ce système comportant aussi un appareillage (8) de détection d'un défaut dans la structure par modulation vibro-acoustique, cet appareillage comportant :
- un émetteur haute fréquence (20) solidaire de la structure, cet émetteur haute fréquence étant apte à générer, en même temps que la présence du signal basse fréquence, un signal haute fréquence qui se propage dans l'épaisseur de la structure et parallèlement à une face de la structure, 95% de la puissance du signal haute fréquence généré étant comprise dans une bande [f_{HFmin}; f_{HFmax}] de fréquences, où la fréquence f_{HFmin} est deux fois supérieure à la fréquence f_{BFmax} et la durée du signal haute fréquence étant supérieure à 1/f_{BFmin},
- un capteur (22) solidaire de la structure, ce capteur étant apte à mesurer un signal vibratoire causé par les signaux basse fréquence et haute fréquence générés en même temps,
- un calculateur (24) configuré pour :
- détecter, à partir des mesures du signal vibratoire, l'existence d'un lobe additionnel de puissance dans un spectre de puissance du signal vibratoire mesuré qui comporte :
- une première plage [u_{BFmin}; u_{BFmax}] de fréquences qui délimite une zone qui contient 95% de la puissance du signal basse fréquence généré en absence du signal haute fréquence , la fréquence u_{BFmin} étant supérieure à 5 Hz
- une seconde plage [u_{HFmin}; u_{HFmax}] de fréquences qui délimite une zone qui contient 95% de la puissance du signal haute fréquence généré en absence du signal basse fréquence,
- uniquement lorsque la structure comporte un défaut, au moins un lobe additionnel de puissance situé en dehors des plages [u_{BFmin}; u_{BFmax}] et [u_{HFmin}, u_{HFmax}],
- signaler un défaut dans la structure si un tel lobe additionnel est détecté et, sinon, inhiber le signalement d'un défaut dans la structure,
dans lequel :
- le système (2) est apte à générer, lorsqu'il est utilisé, le signal basse fréquence sans avoir recours à un émetteur basse fréquence uniquement utilisé pour générer ce signal basse fréquence,
- le système est apte à générer le signal basse fréquence pour lequel la largeur de la première plage [u_{BFmin}; u_{BFmax}] est supérieure à 5 Hz, et
- l'émetteur haute fréquence (20) est configuré pour générer le signal haute fréquence pour lequel la largeur de la seconde plage [u_{HFmin}; u_{HFmax}] de fréquences est systématiquement inférieure à u_{BFmin},
**caractérisé en ce que** :
- l'émetteur haute fréquence est configuré pour :
- générer le signal haute fréquence pendant toute la durée d'un intervalle [tᵢ; tᵢ₊₁], la génération du signal haute fréquence débutant à l'instant tᵢ et s'arrêtant à l'instant tᵢ₊₁, la durée de cet intervalle [tᵢ; tᵢ₊₁] étant supérieure à 1/f_{BFmin}, et
- pendant cet intervalle [tᵢ; tᵢ₊₁], moduler la fréquence du signal haute fréquence pour passer de la fréquence f_{HFmin} à la fréquence f_{HFmax} en suivant une loi prédéterminée L_{HF} de variation qui à chaque instant t situé à l'intérieur de l'intervalle [tᵢ; tᵢ₊₁] associe une fréquence instantanée prédéterminée f_{HF}(t) du signal haute fréquence,
- le calculateur est configuré pour détecter l'existence du lobe additionnel en exécutant les opérations suivantes :
- une opération de ré-échantillonnage adaptatif des mesures du capteur pour obtenir un nouvel échantillonnage des mesures du capteur dans lequel la période d'échantillonnage instantanée à chaque instant t de l'intervalle [tᵢ, tᵢ₊₁] est un multiple entier de 1/f_{HF}(t), le spectre de puissance du nouvel échantillonnage obtenu comportant la première plage [u_{BFmin}; u_{BFmax}] de fréquences, la seconde plage [u_{HFmin}; u_{HFmax}] de fréquences et, uniquement lorsque la structure comporte un défaut, au moins un lobe additionnel de puissance situé en dehors de la première plage [u_{BFmin}; u_{BFmax}] et en dehors de la seconde plage [u_{HFmin}; u_{HFmax}], puis
- la détection du lobe additionnel dans le spectre de puissance du nouvel échantillonnage obtenu.

11. Système selon la revendication 10, dans lequel le dispositif (4) est choisi dans le groupe constitué d'un véhicule de transport d'un matériel ou d'une personne, d'une canalisation, d'un ouvrage sur lequel circule un véhicule de transport d'un matériel ou d'une personne et d'une hélice.

12. Système selon la revendication 10 ou 11, dans lequel :
- l'appareillage (8) de détection d'un défaut comporte plusieurs capteurs solidaires de la structure et disposés à différents emplacements de la structure, chacun de ces capteurs étant aptes à mesurer un signal vibratoire causé par les signaux basse fréquence et haute fréquence générés en même temps, et
- le calculateur (24) est en plus configuré pour détecter le défaut et estimer sa position dans la structure à partir des mesures du signal vibratoire réalisées par lesdits plusieurs capteurs.

## Patentansprüche

1. Verfahren zur Erkennung eines Fehlers in einer Struktur einer Vorrichtung durch vibroakustische Modulation, wobei dieses Verfahren aufweist:
- die Erzeugung (50) eines Niederfrequenzsignals, das die Struktur schwingen lässt, wobei 95% der Leistung dieses Niederfrequenzsignals in einem Frequenzbereich [f_{BFmin}; f_{BFmax}] höher als 5 Hz liegt, wobei die Frequenz f_{BFmin} höher als 5 Hz und die Frequenz f_{BFmax} niedriger als 20 kHz ist,
- gleichzeitig mit dem Vorhandensein des Niederfrequenzsignals, die Erzeugung (82), durch einen fest mit der Struktur verbundenen Hochfrequenzemitter, eines Hochfrequenzsignals, das sich in der Dicke der Struktur und parallel zu einer Seite der Struktur ausbreitet, wobei 95% der Leistung des erzeugten Hochfrequenzsignals in einem Frequenzband [f_{HFmin}; f_{HFmax}] liegt, wobei die Frequenz f_{HFmin} doppelt so hoch ist wie die Frequenz f_{BFmax} und die Dauer des Hochfrequenzsignals länger ist als 1/f_{BFmin},
- die Messung (84) eines von den gleichzeitig erzeugten Niederfrequenz- und Hochfrequenzsignalen verursachten Schwingungssignals durch einen Sensor, wobei ein Leistungsspektrum dieses Schwingungssignals aufweist:
- einen ersten Frequenzbereich [u_{BFmin}; u_{BFmax}], der eine Zone begrenzt, die 95% der Leistung des in Abwesenheit des Hochfrequenzsignals erzeugten Niederfrequenzsignals enthält, wobei die Frequenz u_{BFmin} höher ist als 5 Hz,
- einen zweiten Frequenzbereich [u_{HFmin}; u_{HFmax}], der eine Zone begrenzt, die 95% der Leistung des in Abwesenheit des Niederfrequenzsignals erzeugten Hochfrequenzsignals enthält, und
- nur wenn die Struktur einen Fehler aufweist, mindestens eine zusätzliche Leistungskeule, die sich außerhalb der Bereiche [u_{BFmin}; u_{BFmax}] und [u_{HFmin}, u_{HFmax}] befindet, dann
- die Erkennung (86), ausgehend von den Messungen des Schwingungssignals, des Vorhandenseins der zusätzlichen Keule, dann
- die Meldung (96) eines Fehlers in der Struktur, wenn eine solche zusätzliche Keule erkannt wird, und sonst Abwesenheit einer Meldung eines Fehlers in der Struktur,
wobei:
- die Erzeugung (50) des Niederfrequenzsignals nur die Verwendung der Vorrichtung aufweist, wobei diese Verwendung der Vorrichtung das Niederfrequenzsignal erzeugt, ohne auf einen Niederfrequenzemitter zurückzugreifen, der einzig verwendet wird, um dieses Niederfrequenzsignal zu erzeugen,
- die Breite des ersten Bereichs [u_{BFmin}; u_{BFmax}] größer ist als 5 Hz, und
- die Breite des zweiten Frequenzbereichs [u_{HFmin}; u_{HFmax}] systematisch kleiner ist als u_{BFmin},
**dadurch gekennzeichnet, dass**:
- die Erzeugung (82) des Hochfrequenzsignals aufweist:
- die Erzeugung des Hochfrequenzsignals während der ganzen Dauer eines Intervalls [tᵢ; tᵢ₊₁], wobei die Erzeugung des Hochfrequenzsignals im Zeitpunkt tᵢ beginnt und im Zeitpunkt tᵢ₊₁ endet, wobei die Dauer dieses Intervalls [tᵢ; tᵢ₊₁] größer ist als 1/f_{BFmin}, und
- während dieses Intervalls [tᵢ; tᵢ₊₁] die Frequenz des Hochfrequenzsignals moduliert wird, um von der Frequenz f_{HFmin} zur Frequenz f_{HFmax} überzugehen, gemäß einem vorbestimmten Variationsgesetz L_{HF}, das jedem Zeitpunkt t, der sich innerhalb des Intervalls [tᵢ; tᵢ₊₁] befindet, eine vorbestimmte Augenblicksfrequenz f_{HF}(t) des Hochfrequenzsignals zuordnet,
- die Erkennung (86) des Vorhandenseins der zusätzlichen Keule aufweist:
- einen Vorgang (88) der adaptiven Wiederabtastung der Messungen des Sensors, um eine neue Abtastung der Messungen des Sensors zu erhalten, wobei die augenblickliche Abtastperiode in jedem Zeitpunkt t des Intervalls [tᵢ; tᵢ₊₁] ein ganzes Vielfaches von 1/f_{HF}(t) ist, wobei das Leistungsspektrum der erhaltenen neuen Abtastung den ersten Frequenzbereich [u_{BFmin}; u_{BFmax}], den zweiten Frequenzbereich [u_{HFmin}; u_{HFmax}], und einzig, wenn die Struktur einen Fehler aufweist, mindestens eine zusätzliche Leistungskeule aufweist, die sich außerhalb des ersten Bereichs [u_{BFmin}; u_{BFmax}] und außerhalb des zweiten Bereichs [u_{HFmin}, u_{HFmax}] befindet, dann
- die Erkennung der zusätzlichen Keule im Leistungsspektrum der erhaltenen neuen Abtastung.

2. Verfahren nach Anspruch 1, wobei die Breite des Frequenzbands [f_{HFmin}; f_{HFmax}] größer ist als 10 kHz und vorzugsweise größer als 50 kHz.

3. Verfahren nach einem der vorhergehenden Ansprüche, wobei nur ein Sensor zum Messen des Schwingungssignals verwendet wird.

4. Verfahren nach einem der vorhergehenden Ansprüche, wobei das Gesetz L_{HF} eine lineare Funktion oder eine exponentielle Funktion der Zeit ist.

5. Verfahren nach einem der vorhergehenden Ansprüche, wobei das Verfahren eine Kalibrierungsphase (60) aufweist, die aufweist:
- den Stopp der Erzeugung des Hochfrequenzsignals und parallel dazu die Messung (62) des nur vom Niederfrequenzsignal verursachten Schwingungssignals durch den Sensor, dann
- die Bestimmung (64) der Frequenz f_{BFmin} ausgehend vom nur vom Niederfrequenzsignal verursachten Schwingungssignal, dann
- die Einstellung des Hochfrequenzemitters, damit die Erzeugung des Hochfrequenzsignals während einer Dauer länger als 1/f_{BFmin} dauert.

6. Verfahren nach einem der vorhergehenden Ansprüche, wobei das erzeugte Hochfrequenzsignal eine Lamb-Welle oder eine Rayleigh-Welle ist.

7. Verfahren nach einem der Ansprüche 1, 2 und 4 bis 5, wobei das Verfahren aufweist:
- die Messung (84), durch mehrere fest mit der Struktur verbundene und an verschiedenen Stellen der Struktur angeordnete Sensoren, des von den gleichzeitig erzeugten Niederfrequenz- und Hochfrequenzsignalen verursachten Schwingungssignals, und
- die Erkennung des Fehlers und die Schätzung seiner Position in der Struktur ausgehend von den von den mehreren Sensoren durchgeführten Messungen des Schwingungssignals.

8. Verfahren nach einem der vorhergehenden Ansprüche, wobei die Verwendung der Vorrichtung, die das Niederfrequenzsignal erzeugt, aus der Gruppe ausgewählt wird, die aus den folgenden Verwendungen besteht:
- wenn die Vorrichtung ein Transportfahrzeug eines Materials oder einer Person ist, besteht die Verwendung der Vorrichtung darin, dieses Material oder diese Person mit Hilfe dieses Fahrzeugs entlang einer Strecke zu transportieren,
- wenn die Vorrichtung eine Flüssigkeitstransportleitung ist, besteht die Verwendung der Vorrichtung darin, die im Inneren dieser Leitung zu transportierende Flüssigkeit im Turbulenzbetrieb strömen zu lassen,
- wenn die Vorrichtung ein Bauwerk ist, auf dem ein Transportfahrzeug eines Materials oder einer Person fährt, besteht die Verwendung der Vorrichtung darin, dieses Transportfahrzeug auf diesem Bauwerk fahren zu lassen, und
- wenn die Vorrichtung ein Propeller ist, besteht die Verwendung der Vorrichtung darin, den Propeller in Drehung zu versetzen, um eine Flüssigkeitsmasse mit Hilfe dieses Propellers zu verschieben.

9. Verfahren nach einem der vorhergehenden Ansprüche, wobei die Erzeugung des Niederfrequenzsignals die Erzeugung des Niederfrequenzsignals mit einer ausreichenden Leistung aufweist, um den Fehler periodisch zwischen einem geschlossenen Zustand und einem offenen Zustand mit einer im Band [f_{BFmin}; f_{BFmax}] enthaltenen Frequenz zu verformen.

10. System, das eine mit einer Struktur (6) ausgestattete Vorrichtung (4) aufweist, wobei dieses System fähig ist, wenn es verwendet wird, ein Niederfrequenzsignal zu erzeugen, das die Struktur in Schwingung versetzt, wobei 95% der Leistung dieses Niederfrequenzsignals in einem Frequenzbereich [f_{BFmin}; f_{BFmax}] höher als 5 Hz enthalten ist, wobei die Frequenz f_{BFmin} höher ist als 5 Hz und die Frequenz f_{BFmax} niedriger ist als 20 kHz,
wobei dieses System auch eine Einrichtung (8) zur Erkennung eines Fehlers in der Struktur durch vibroakustische Modulation aufweist, wobei diese Einrichtung aufweist:
- einen fest mit der Struktur verbundenen Hochfrequenzemitter (20), wobei dieser Hochfrequenzemitter fähig ist, gleichzeitig mit dem Vorhandensein des Niederfrequenzsignals ein Hochfrequenzsignal zu erzeugen, das sich in der Dicke der Struktur und parallel zu einer Seite der Struktur ausbreitet, wobei 95% der Leistung des erzeugten Hochfrequenzsignals in einem Frequenzband [f_{HFmin}; f_{HFmax}] liegt, wobei die Frequenz f_{HFmin} doppelt so hoch ist wie die Frequenz f_{BFmax} und die Dauer des Hochfrequenzsignals länger ist als 1/f_{BFmin},
- einen fest mit der Struktur verbundenen Sensor (22), wobei dieser Sensor fähig ist, ein Schwingungssignal zu messen, das von den gleichzeitig erzeugten Niederfrequenz- und Hochfrequenzsignalen verursacht wird,
- einen Rechner (24), der konfiguriert ist, um:
- ausgehend von den Messungen des Schwingungssignals das Vorhandensein einer zusätzlichen Leistungskeule in einem Leistungsspektrum des gemessenen Schwingungssignals zu erkennen, das aufweist:
- einen ersten Frequenzbereich [u_{BFmin}; u_{BFmax}], der eine Zone begrenzt, die 95% der Leistung des in Abwesenheit des Hochfrequenzsignals erzeugten Niederfrequenzsignals enthält, wobei die Frequenz u_{BFmin} höher ist als 5 Hz,
- einen zweiten Frequenzbereich [u_{HFmin}; u_{HFmax}], der eine Zone begrenzt, die 95% der Leistung des in Abwesenheit des Niederfrequenzsignals erzeugten Hochfrequenzsignals enthält,
- einzig wenn die Struktur einen Fehler aufweist, mindestens eine zusätzliche Leistungskeule, die sich außerhalb der Bereiche [u_{BFmin}; u_{BFmax}] und [u_{HFmin}; u_{HFmax}] befindet,
- einen Fehler in der Struktur zu melden, wenn eine solche zusätzliche Keule erkannt wird, und sonst die Meldung eines Fehlers in der Struktur zu verhindern,
wobei:
- das System (2) fähig ist, wenn es verwendet wird, das Niederfrequenzsignal zu erzeugen, ohne auf einen Niederfrequenzemitter zurückzugreifen, der einzig verwendet wird, um dieses Niederfrequenzsignal zu erzeugen,
- das System fähig ist, das Niederfrequenzsignal zu erzeugen, für das die Breite des ersten Bereichs [u_{BFmin}; u_{BFmax}] größer ist als 5 Hz, und
- der Hochfrequenzemitter (20) konfiguriert ist, um das Hochfrequenzsignal zu erzeugen, für das die Breite des zweiten Frequenzbereichs [u_{HFmin}; u_{HFmax}] systematisch kleiner ist als u_{BFmin},
**dadurch gekennzeichnet, dass**:
- der Hochfrequenzemitter konfiguriert ist, um:
- das Hochfrequenzsignals während der ganzen Dauer eines Intervalls [tᵢ; tᵢ₊₁] zu erzeugen, wobei die Erzeugung des Hochfrequenzsignals im Zeitpunkt tᵢ beginnt und im Zeitpunkt tᵢ₊₁ stoppt, wobei die Dauer dieses Intervalls [tᵢ; tᵢ₊₁] größer ist als 1/f_{BFmin}, und
- während dieses Intervalls [tᵢ; tᵢ₊₁] die Frequenz des Hochfrequenzsignals zu modulieren, um von der Frequenz f_{HFmin} zur Frequenz f_{HFmax} überzugehen, gemäß einem vorbestimmten Variationsgesetz L_{HF}, das jedem Zeitpunkt t, der sich innerhalb des Intervalls [tᵢ; tᵢ₊₁] befindet, eine vorbestimmte Augenblicksfrequenz f_{HF}(t) des Hochfrequenzsignals zuordnet,
- der Rechner konfiguriert ist, um das Vorhandensein der zusätzlichen Keule durch Ausführung der folgenden Vorgänge zu erkennen:
- einen Vorgang der adaptiven Wiederabtastung der Messungen des Sensors, um eine neue Abtastung der Messungen des Sensors zu erhalten, wobei die augenblickliche Abtastperiode in jedem Zeitpunkt t des Intervalls [tᵢ; tᵢ₊₁] ein ganzes Vielfaches von 1/f_{HF}(t) ist, wobei das Leistungsspektrum der erhaltenen neuen Abtastung den ersten Frequenzbereich [u_{BFmin}; u_{BFmax}], den zweiten Frequenzbereich [u_{HFmin}; u_{HFmax}] und einzig, wenn die Struktur einen Fehler aufweist, mindestens eine zusätzliche Leistungskeule aufweist, die sich außerhalb des ersten Bereichs [u_{BFmin}; u_{BFmax}] und außerhalb des zweiten Bereichs [u_{HFmin}, u_{HFmax}] befindet, dann
- die Erkennung der zusätzlichen Keule im Leistungsspektrum der erhaltenen neuen Abtastung.

11. System nach Anspruch 10, wobei die Vorrichtung (4) aus der Gruppe ausgewählt wird, die aus einem Transportfahrzeug eines Materials oder einer Person, einer Rohrleitung, einem Bauwerk, auf dem ein Transportfahrzeug eines Materials oder einer Person fährt, und einem Propeller besteht.

12. System nach Anspruch 10 oder 11, wobei
- die Einrichtung (8) zur Erkennung eines Fehlers mehrere Sensoren aufweist, die fest mit der Struktur verbunden und an verschiedenen Stellen der Struktur angeordnet sind, wobei jeder dieser Sensoren fähig ist, ein Schwingungssignal zu messen, das von den gleichzeitig erzeugten Niederfrequenz- und Hochfrequenzsignalen verursacht wird, und
- der Rechner (24) außerdem konfiguriert ist, um den Fehler zu erkennen und seine Position in der Struktur ausgehend von den von den mehreren Sensoren durchgeführten Messungen des Schwingungssignals zu schätzen.

## Claims

1. Method for detecting a defect in a structure of a device via vibro-acoustic modulation, this method comprising:
- generating (50) a low-frequency signal that makes the structure vibrate, 95% of the power of this low-frequency signal being comprised in a frequency range [f_{BFmin}; f_{BFmax}] higher than 5 Hz, where the frequency f_{BFmin} is higher than 5 Hz and the frequency f_{BFmax} is lower than 20 kHz,
- at the same time as the low-frequency signal is present, generating (82), via a high-frequency emitter securely fastened to the structure, a high-frequency signal that propagates through the thickness of the structure and parallel to a face of the structure, 95% of the power of the generated high-frequency signal being comprised in a frequency band [f_{HFmin}; f_{HFmax}], where the frequency f_{HFmin} is two times higher than the frequency f_{BFmax} and the duration of the high-frequency signal is longer than 1/f_{BFmin},
- measuring (84), with a sensor, a vibratory signal caused by the generated low-frequency and high-frequency signals at the same time, a power spectrum of this vibratory signal comprising:
- a first frequency range [u_{BFmin}; u_{BFmax}] that demarcates a region that contains 95% of the power of the generated low-frequency signal in the absence of the high-frequency signal, the frequency u_{BFmin} being higher than 5 Hz,
- a second frequency range [u_{HFmin}; u_{HFmax}] that demarcates a region that contains 95% of the power of the generated high-frequency signal in the absence of the low-frequency signal, and
- only when the structure contains a defect, at least one additional power lobe located outside of the ranges [u_{BFmin}; u_{BFmax}] and [u_{HFmin}; u_{H-Fmax}], then
- detecting (86), on the basis of the measurements of the vibratory signal, the existence of the additional lobe, then
- signalling (96) that there is a defect in the structure if such an additional lobe is detected and, otherwise, not signalling that there is a defect in the structure,
in which:
- the generation (50) of the low-frequency signal comprises only using the device, this use of the device generating the low-frequency signal without requiring recourse to be made to a low-frequency emitter only used to generate this low-frequency signal,
- the width of the first range [u_{BFmin}; u_{BFmax}] is larger than 5 Hz, and
- the width of the second frequency range [u_{HFmin}; u_{HFmax}] is systematically smaller than u_{BFmin},
**characterized in that**:
- the generation (82) of the high-frequency signal comprises:
- generating the high-frequency signal throughout an interval [tᵢ; tᵢ₊₁], the generation of the high-frequency signal starting at the time tᵢ and stopping at the time tᵢ₊₁, the duration of this interval [tᵢ; tᵢ₊₁] being longer than 1/f_{BFmin}, and
- during this interval [tᵢ; tᵢ₊₁], the frequency of the high-frequency signal is modulated to pass from the frequency f_{HFmin} to the frequency f_{HFmax} according to a predetermined variation law L_{HF} that, with each time t located inside the interval [tᵢ; tᵢ₊₁], associates one predetermined instantaneous frequency f_{HF}(t) of the high-frequency signal,
- the detection (86) of the existence of the additional lobe comprises:
- an operation (88) of adaptively re-sampling the measurements of the sensor to obtain a new sampling of the measurements of the sensor in which the instantaneous sampling period at each time t of the interval [tᵢ; tᵢ₊₁] is an integer multiple of 1/f_{HF}(t), the power spectrum of the obtained new sampling comprising the first frequency range [u_{B-Fmin}; u_{BFmax}], the second frequency range [u_{HFmin}; u_{HFmax}] and, only when the structure contains a defect, at least one additional power lobe located outside of the first range [u_{BFmin}; u_{BFmax}] and outside of the second range [u_{HFmin}; u_{HFmax}], then - detecting the additional lobe in the power spectrum of the obtained new sampling.

2. Method according to Claim 1, wherein the width of the frequency band [f_{HFmin}; f_{H-Fmax}] is larger than 10 kHz and, preferably, larger than 50 kHz.

3. Method according to either one of the preceding claims, wherein a single sensor is used to measure the vibratory signal.

4. Method according to any one of the preceding claims, wherein the law L_{HF} is a linear function or an exponential function of time.

5. Method according to any one of the preceding claims, wherein the method comprises a calibrating phase (60) that comprises:
- stopping the generation of the high-frequency signal and, in parallel, measuring (62), via the sensor, the vibratory signal caused by the low-frequency signal alone, then
- determining (64), on the basis of the vibratory signal caused by the low-frequency signal alone, the frequency f_{BFmin}, then
- adjusting the high-frequency emitter so that the generation of the high-frequency signal lasts for a duration longer than 1/f_{BFmin}.

6. Method according to any one of the preceding claims, wherein the generated high-frequency signal is a Lamb wave or a Rayleigh wave.

7. Method according to any one of Claims 1, 2 and 4 to 5, wherein the method com - prises:
- measuring (84), with a plurality of sensors securely fastened to the structure and placed in various locations on the structure, the vibratory signal caused by the generated low-frequency and high-frequency signals at the same time, and
- detecting the defect and estimating its position in the structure on the basis of the measurements of the vibratory signal carried out by said plurality of sensors.

8. Method according to any one of the preceding claims, wherein the use of the device that generates the low-frequency signal is chosen from the group consisting of the following uses:
- in the case where the device is a vehicle for transporting an item of hardware or a person, the use of the device consists in transporting this item of hardware or this person along a path using this vehicle,
- in the case where the device is a duct for transporting fluid, the use of the device consists in making the fluid to be transported flow, in turbulent regime, through the interior of this duct,
- in the case where the device is a construction over which a vehicle for transporting an item of hardware or a person is driven, the use of the device consists in making this transporting vehicle drive over this construction, and
- in the case where the device is an impeller or propeller, the use of the device consists in driving the impeller or propeller to rotate to move a mass of fluid using this impeller or propeller.

9. Method according to any one of the preceding claims, wherein the generation of the low-frequency signal comprises generating the low-frequency signal with a sufficient power to periodically deform the defect between a closed state and an open state at a frequency comprised in the band [f_{BFmin}; f_{BFmax}].

10. System comprising a device (4) equipped with a structure (6), this system being able to generate, when it is used, a low-frequency signal that makes the structure vibrate, 95% of the power of this low-frequency signal being comprised in a frequency range [f_{BFmin}; f_{BFmax}] higher than 5 Hz, where the frequency f_{BFmin} is higher than 5 Hz and the frequency f_{BFmax} is lower than 20 kHz,
this system also comprising an apparatus (8) for detecting a defect in the structure via vibro-acoustic modulation, this apparatus comprising:
- a high-frequency emitter (20) securely fastened to the structure, this high-frequency emitter being able to generate, at the same time as the low-frequency signal is present, a high-frequency signal that propagates through the thickness of the structure and parallel to a face of the structure, 95% of the power of the generated high-frequency signal being comprised in a frequency band [f_{HFmin}; f_{HFmax}], where the frequency f_{HFmin} is two times higher than the frequency f_{BFmax} and the duration of the high-frequency signal being longer than 1/f_{BFmin},
- a sensor (22) that is securely fastened to the structure, this sensor being able to measure a vibratory signal caused by the generated low-frequency and high-frequency signals at the same time,
- a computer (24) configured to:
- detect, on the basis of the measurements of the vibratory signal, the existence of an additional power lobe in a power spectrum of the measured vibratory signal, which comprises:
- a first frequency range [u_{BFmin}; u_{SFmax}] that demarcates a region that contains 95% of the power of the generated low-frequency signal in the absence of the high-frequency signal, the frequency u_{BFmin} being higher than 5 Hz,
- a second frequency range [u_{HFmin}; u_{HFmax}] that demarcates a region that contains 95% of the power of the generated high-frequency signal in the absence of the low-frequency signal,
- only when the structure contains a defect, at least one additional power lobe located outside of the ranges [u_{BFmin}; u_{BFmax}] and [u_{HFmin}; u_{HFmax}],
- signal that there is a defect in the structure if such an additional lobe is detected and, otherwise, inhibit signalling of a defect in the structure,
in which:
- the system (2) is able to generate, when it is used, the low-frequency signal without requiring recourse to be made to a low-frequency emitter only used to generate this low-frequency signal,
- the system is able to generate the low-frequency signal for which the width of the first range [u_{BFmin}; u_{BFmax}] is larger than 5 Hz, and
- the high-frequency emitter (20) is configured to generate the high-frequency signal for which the width of the second frequency range [u_{HFmin}; u_{HFmax}] is systematically smaller than u_{BFmin},
**characterized in that**:
- the high-frequency emitter is configured to:
- generate the high-frequency signal throughout an interval [tᵢ; tᵢ₊₁], the generation of the high-frequency signal starting at the time tᵢ and stopping at the time tᵢ₊₁, the duration of this interval [tᵢ; tᵢ₊₁] being longer than 1/f_{BFmin}, and
- during this interval [tᵢ; tᵢ₊₁], modulate the frequency of the high-frequency signal to pass from the frequency f_{HFmin} to the frequency f_{HFmax} according to a predetermined variation law L_{HF} that, with each time t located inside the interval [tᵢ; tᵢ₊₁], associates one predetermined instantaneous frequency f_{HF}(t) of the high-frequency signal,
- the computer is configured to detect the existence of the additional lobe by executing the following operations:
- an operation of adaptively re-sampling the measurements of the sensor to obtain a new sampling of the measurements of the sensor in which the instantaneous sampling period at each time t of the interval [tᵢ; tᵢ₊₁] is an integer multiple of 1/f_{HF}(t), the power spectrum of the obtained new sampling comprising the first frequency range [u_{B-Fmin}; u_{BFmax}], the second frequency range [u_{HFmin}; u_{HFmax}] and, only when the structure contains a defect, at least one additional power lobe located outside of the first range [u_{BFmin}; u_{BFmax}] and outside of the second range [u_{HFmin}; u_{HFmax}], then
- detecting the additional lobe in the power spectrum of the obtained new sampling.

11. System according to Claim 10, wherein the device (4) is chosen from the group consisting of a vehicle for transporting an item of hardware or a person, a duct, a construction over which is driven a vehicle for transporting an item of hardware or a person and a propeller or impeller.

12. System according to Claim 10 or 11, wherein:
- the apparatus (8) for detecting a defect comprises a plurality of sensors securely fastened to the structure and placed in various locations on the structure, each of the sensors being able to measure a vibratory signal caused by the generated low-frequency and high-frequency signals at the same time, and
- the computer (24) is in addition configured to detect the defect and to estimate its position in the structure on the basis of the measurements of the vibratory signal carried out by said plurality of sensors.
